# EUROPEAN PATENT SPECIFICATION

(11) **EP 1 012 939 B1**
(45) Date of publication and mention of the grant of the patent: **04.12.2002**
(21) Application number: 97940476.1
(22) Date of filing: 11.09.1997
(51) Int. Cl.: H02G 3/18, H02G 3/08

(54) **ASSEMBLIES FOR COUPLING WIRES, AS WELL AS A PORT FOR SUCH AN ASSEMBLY**
ANORDNUNG ZUM VERBINDEN VON KABEL SOWIE EIN TOR FÜR SO EINE ANORDNUNG
SYSTEME PERMETTANT DE COUPLER DES CABLES ET DISPOSITIF D'ACCES POUR CE SYSTEME

(30) Priority: 11.09.1996 NL 1004003
(43) Date of publication of application: 28.06.2000
(73) Proprietor: WATERS BEHEER B.V., 5692 EB Son (NL)
(72) Inventor: WATERS, Leopold, Arnoldus, Maria, NL-5664 RL Geldrop (NL)
(74) Representative: Fieret, Johannes, Ir.
(86) International application number: NL9700517
(87) International publication number: WO98011638

(56) References cited:
- US-A- 3 110 753
- US-A- 4 455 449
- US-A- 5 362 922

## Description

The invention relates to an assembly for coupling wires, which assembly is provided with a box comprising chambers, which box comprises at least three ports and one closing device, by means of which the connection from one port to at least one of the other ports can be closed.

The invention also relates to an assembly for coupling wires, which assembly is provided with a box comprising a chamber, which box comprises at least two ports and a closing device, by means of which the connection between the first port to the second port can closed off from said chamber.

With a similar assembly known from US patent US-A-5,362,922 the box is divided into two spaces by means of a detachable partition plate. One space is used for coupling wires intended for telecommunication, and the other space is used for coupling wires intended for alternating voltage. The partition plate effects a separation in accordance with statutory standards between the low voltage (for example 12 V) telecommunication wires, and the high voltage (110 V or 230 V) electric wires. The partition plate is provided with edge portions, which can be removed only once, thus giving access to the space under the partition plate from surrounding compartments provided with ports. The space present under the partition plate can be divided into subspaces by means of a flexible partition strip. Access to the space present above the partition plate from the compartments can be barred by means of cover plates.

The known assembly has a number of drawbacks.

In order to effect a desired division into spaces which are used for low voltage and high voltage respectively, it will be necessary to remove the required edge portions, to provide the partition strip as well as to position the cover plates provided with the correct apertures. This is relatively labourious and there is a risk that it will remain possible to gain access to the two spaces from a compartment because of the relatively large number of operations to be performed, or that a compartment will come into communication with the wrong space, which is undesirable in either case.

The fact is that if a cover plate is selected which makes it possible to gain access to the space present above the partition plate, and an edge portion is removed, so that it becomes possible to gain access to the space under the partition plate, the compartment will be in communication with both spaces, which is impermissible.

Another drawback of the known assembly is the fact that the changing of a particular arrangement, once it has been selected, is a relatively labourious activity, because the partition plate must be removed from the box in order to remove edge portions, to which end all wires present above the partition plate must be disconnected. Furthermore this involves the risk of the wires connections being incorrectly restored after the partition plate has been returned to its original position.

The object of the invention is to provide an assembly wherein a port is unequivocally in communication with one of said chambers.

This objective is accomplished with an assembly according to the invention in that the box comprises at least two cham bers, which each comprise at least one of said ports, whereby the assembly is furthermore provided with a port comprising said closing device, which is provided on one side with at least two apertures opening into different chambers in the box, and which is provided on a side facing away from the box with a single passage, whereby the closing device can be moved at least from a first position, in which said passage opens into the first chamber and access to the second chamber from said passage is barred, to a second position, in which said passage opens into the second chamber and access to the first chamber from said passage is barred, and vice versa.

Depending on the position of the closing device, the port comprising the closing device will be in open communication with one chamber, whilst the connection with the other chamber will be closed. As a result of this one port is unequivocally associated with one chamber. If it is desirable to bring the port into communication with the other chamber, it is only necessary to reverse the closing device associated with a respective port. The other wires can be left as they are.

Depending on the position of the closing device, a number of conduits coupled to the ports and the wires present therein belong to one and the same network, whilst the other conduits coupled to the ports are disconnected from this network.

One embodiment of the assembly according to the invention is characterized in that wires extend through the closing device in use, whereby the closing device can only be moved from one position to the other after the wires extending through the closing device have been removed.

In this manner wires present in a chamber cannot be accidentally connected to wires present in another chamber. The wires must first be removed from the closing device, after which the closing device can be moved and access to another chamber from the passage can be provided. This obliges an operator to change the wiring very consciously.

Another embodiment of the assembly according to the invention is characterized in that the box is provided with partition walls extending transversely to a bottom portion.

The partition walls extending transversely to the bottom portion provide chambers arranged in adjoining relationship, to which access can be simultaneously gained. With the assembly known from US-A-5,362,922 the chamber present under the partition plate is no longer accessible after the partition plate has been placed. This makes the changing of the wiring a relatively labourious activity.

Another object of the invention is to provide an assembly for coupling wires, which assembly is provided with a box comprising at least one chamber, which box comprises at least two ports and one closing device, by means of which the connection between the first port and the second port can be closed off from said chamber.

The object of the invention is to provide an assembly wherein the wires present in the ports may or may not be capable of being connected to wires present in the chamber.

This objective is accomplished with the assembly according to the invention in that the box comprises two aligned tube portions making up the ports, whereby the closing device comprises a tubular segment, which can be detachably fitted between said two tube portions.

If the tubular segment is positioned between the tube portions, said tube portions and said tubular segment form an elongated tube, which is closed off from the chamber present within the box. The wires present in the tube form part of a network, which is separated from a network present in the chamber in the box. If the tubular segment is removed from the tube portions, the two ports of said tube portions will be in open communication with the chamber in the box and may become part of the same network.

The invention will be explained in more detail with reference to the drawings, in which:
Figure 1 is a perspective view of a part of a house;
Figures 2A, B and C are a plan view and side views respectively of a flush junction box;
Figure 3 is a perspective view of an assembly according to the invention;
Figure 4 shows a second embodiment of an assembly according to the invention;
Figures 5A-E are a plan view and side views respectively of another embodiment of an assembly according to the invention;
Figures 6A-E are a plan view and side views respectively of yet another embodiment of an assembly according to the invention;
Figures 7 - 13 are sectional views of various ports comprising closing devices according to the invention;
Figures 14A-B, 15A-B and 16A-B each show a cross-sectional view and a front view respectively of various ports comprising closing devices according to the invention;
Figures 17A-D are views of the closing device shown in Figures 14A-B, 15A-B and 16A-B;
Figures 18A-H and Figures 19A-H are various views of various ports comprising closing devices according to the invention;
Figure 20 is a front view of an assembly according to the invention;
Figures 21 - 26 are front views and side views of various embodiments of assemblies according to the invention;
Figure 27 shows another port with a closing device according to the invention;
Figures 28 and 29 show further embodiments of assemblies according to the invention;
Figure 30 is a perspective view of a part of a house comprising an assembly according to the invention;
Figures 31A-B are a plan view and a side view respectively of another embodiment of an assembly according to the invention;
Figures 32A-C are a plan view, a side view and a detail respectively of another embodiment of an assembly according to the invention;
Figures 33A-C are a plan view and side views respectively of yet another embodiment of an assembly according to the invention;
Figures 34A-H are plan views, side views and perspective views respectively of another embodiment of an assembly according to the invention;
Figures 35A-C are a plan view and side views respectively of an assembly according to the invention;
Figures 36A-C are perspective views of a port comprising one, two and three closing devices respectively according to the invention;
Figures 37A-D; Figures 38A-E; Figure 39A-E are plan views, side views and perspective views respectively of a assembly according to the invention comprising ports as shown in Figure 36B;
Figures 40A-F show various uses of assemblies according to the invention comprising two, three, four and five mutually separated networks;
Figures 41A-C are a plan view and side views respectively of an assembly according to the invention comprising conduits extending through the bottom plate;
Figure 42 is a perspective exploded view of an assembly according to the invention with the electronics and sensors used therein;
Figures 43A-B are a plan view and a perspective view respectively of an assembly according to the invention comprising feed-through conduits;
Figure 44 is a perspective view of an assembly according to the invention comprising a removable cover; and
Figures 45A-F show another assembly according to the invention.

Like parts are numbered alike in the Figures.

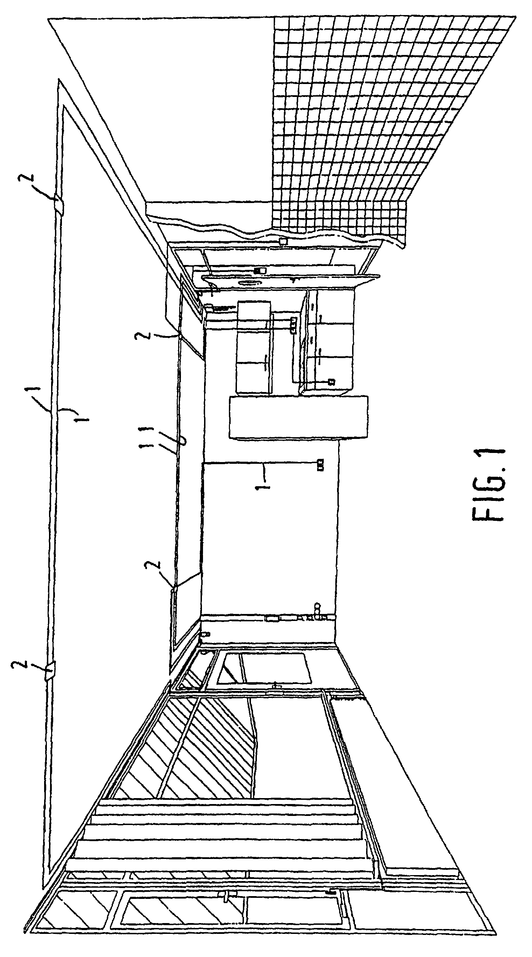

Figure 1 shows a part of a house in which conduits 1 are provided for wires for electricity distribution, lighting, telephone communication, distribution of television and radio signals, alarm systems, public-address and call installations, sound equipment, computer networks, climate control, access control systems, energy management systems, etc. Said wires, which form part of different networks, may be coupled together at certain places, for example for turning on light in dependence on a light intensity measured by means of a sensor, operating a sunshade in dependence on information on the amount of light and the wind force measured by means of light and wind sensors, or controlling electric curtain openers, thermostats, door openers, etc. via an infrared sensor. Conduits 1 will be used for selected networks, depending on the wishes of an occupant and future developments. In order to be able to anticipate future requirements it is important that conduits I can be adapted to suit other networks. The fact is that for safety reasons it is not always permitted to use one and the same conduit for wires of different networks, for example for high voltage and low voltage applications. In those places where conduits 1 cross each other, assemblies 2 according to the invention are provided, wherein wires of different networks are electrically separated from each other. As will be apparent from the other Figures, it is possible, however, to modify each assembly 2 in such a manner that an electric separation of the various networks remains possible, also in case of a change of the networks in conduits 1.

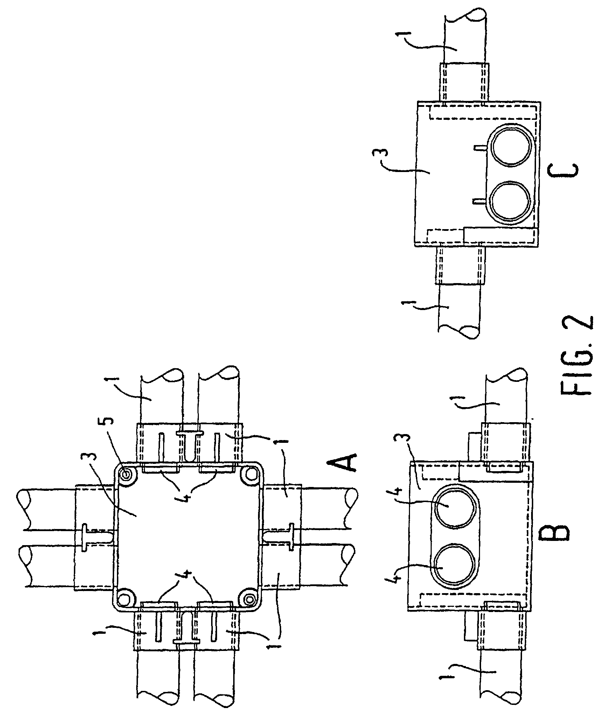

Figures 2A-C show a conventional flush junction box 3, which can be built into a wall or a ceiling of a house. Connected to box 3 are various conduits 1, which open into box 3 via ports 4. Inside said box 3 wires (not shown) present within said conduits 1 are interconnected in a desired manner. After the wires have been connected in a desired manner, box 3 is closed by means of a cover (not shown), which is connected to the box by means of screws fixed in openings 5.

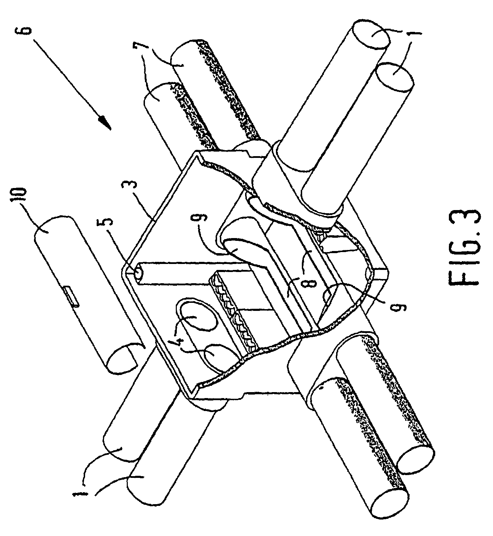

Figure 3 shows an assembly 6 according to the invention. Said assembly 6 largely corresponds with the flush junction box 3 shown in Figure 2. Assembly 6 comprises two parallel conduits 7, however, which are provided with recesses 8 within box 3. As a result of the presence of recess 8, each conduit 7 comprises two ports 9. A tubular cap 10 can be fitted over recess 8, as a result of which conduit 7 extends through box 3, as it were, and does not comprise any ports opening into box 3. When no caps 10 are present on conduits 7, assembly 6 can be used in a similar manner as box 3 shown in Figure 2, for example for the installation of an electricity network for 230 V. It is also possible, however, to use assembly 6 for high voltage current (230 V) as well as for low voltage current (12 V). The wires for the low voltage network are for example laid in left-hand conduit 7, whereby a cap 10 is fitted over recess 8 in conduit 7, as a result of which the low voltage network is electrically separated from the high voltage network in other conduit 7 and conduits 1. If it should be decided at a later stage to have the wires present in conduit 7 form part of the high voltage network as yet, it will only be necessary to remove cap 10 and make the required wire connections. Of course it is also possible to fit a cap 10 over the other conduit 7 and to use the wires present in conduit 7 for a low voltage network.

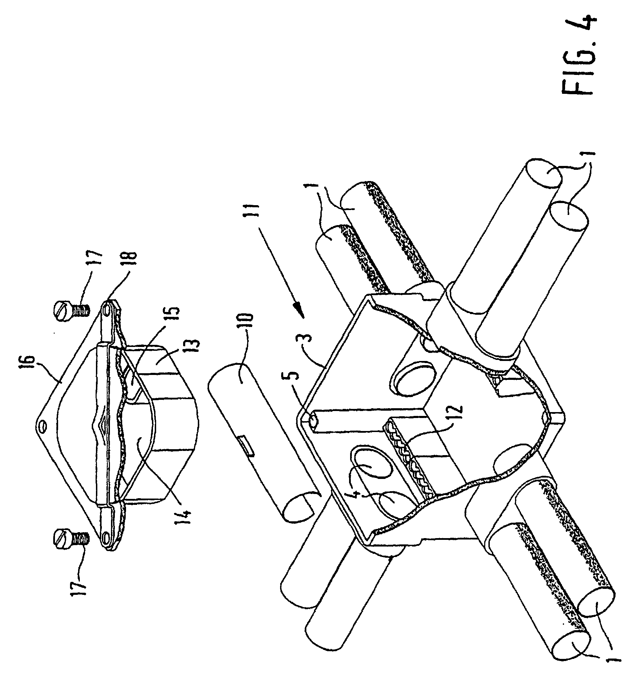

Figure 4 shows another embodiment of an assembly 11 according to the invention, box 3 of which largely corresponds with the box shown in Figure 2. Box 3 is provided along two opposite side walls with electric connecting blocks 12. Aligned conduits 1 can be electrically insulated from the other conduits by means of tubular cap 10. Cap 10 is thereby fitted with its ends over the ends of the aligned conduits 1. Assembly 11 furthermore comprises an auxiliary box 13, which comprises two mutually separated chambers 14 and 15. Auxiliary box 13 can be attached within box 3, whereby the bottom of box 13 is positioned above ports 4. Auxiliary box 13 and box 3 can be closed by means of a cover 16. Cover 16 is fixed to box 3 by means of screws 17, which are screwed into openings 5 in the box through openings 18 in cover 16. The operation of assembly 11 according to the invention is as follows. Electric wires of different networks are electrically separated from each other by means of caps 10. If a lead-through to a space outside assembly 11 is wanted for both networks, the wires of one network are passed through chamber 14 of box 13, whereas the wires of the other network are passed through chamber 15 of auxiliary box 13. In chamber 14 the interconnections of the network present therein can be made. No caps 10 are used for this, but the electric separation takes place in auxiliary box 13. If desired an electric sensor, for example an infrared sensor,-may be placed in chamber 14. If it should be decided at a later stage to use conduits 1 for other networks, a new functional and electric separation of the various networks can be obtained in a simple manner by fitting or removing covers 10 and reorienting the wires in auxiliary box 13.

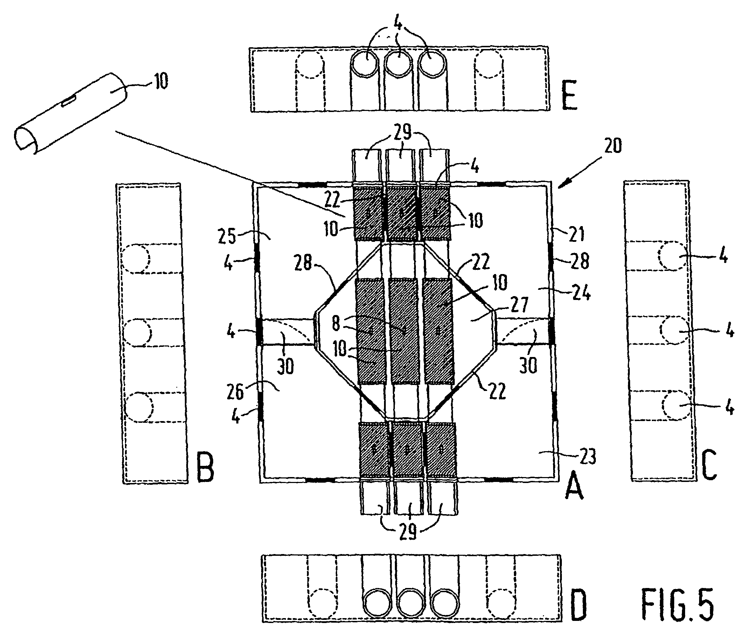

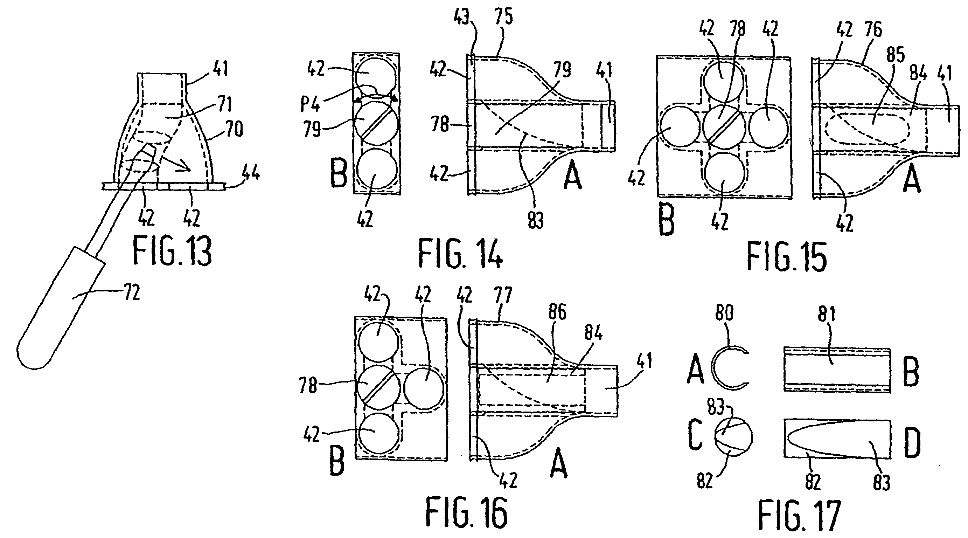

Figures 5A-E are a front view and side views respectively of an assembly 20 according to the invention, which comprises a box 21, in which various chambers 23-27 are formed by means of a number of partitions 22. Said partitions 22 are provided with slides 28, by means of which passages between the respective chambers and to conduits 1 present outside box 21 can be selectively opened or closed. Box 21 is provided with three conduits 29 extending through box 21 in parallel relationship, which conduits are each provided with three recesses 8 (not visible) opening into different chambers, which are closed by means of tubular caps 10. The wires of different networks can be accommodated in the respective chambers 23-27. The wires present in conduits 29 can be connected to the wires in one of the respective chambers 23-27 by selectively removing covers 10, or be passed through box 21 without interruption. If it should be decided at a later stage to connect the wires in a conduit 29 to wires present in one of the chambers 23-27, it will only be necessary to remove the respective cap 10, as a result of which an aperture to the respective chamber will be formed. Box 21 also comprises two ports 4, which can be selectively connected to a chamber positioned on the left of port 4 or to a chamber positioned on the right of port 4 by means of a closing device 30. Closing device 30 will be explained in more detail with reference to Figures 16 and 17.

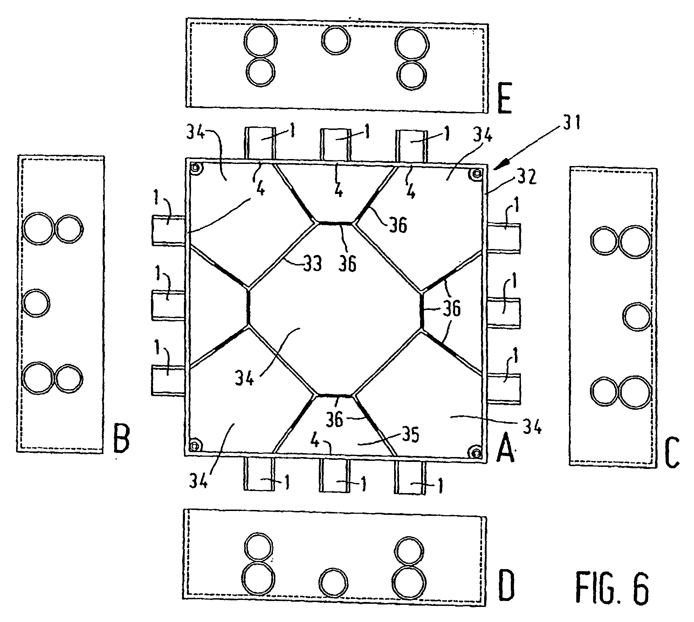

Figures 6A-E show another embodiment of an assembly 31 according to the invention comprising a box 32, which is provided along all side walls with a number of conduits 1, which open into box 32 via ports 4. Box 32 is divided into a number of chambers 34 by means of partitions 33. A trapezoidal chamber 35 adjoining three chambers 34 is provided near the middle port 4 of each side wall of box 32. A detachable slide 36 is provided in the partition wall 33 to each adjoining chamber 34, through which chamber 35 can be brought into open communication with the adjoining chamber 34. Slides 36 form closing devices, by means of which the passage through a middle conduit 1 via port 4 to a port 4 opening into another chamber 34 can be selectively opened or closed. Selected slides 36 are removed or maintained in dependence on the wires of the various networks present in box 32.

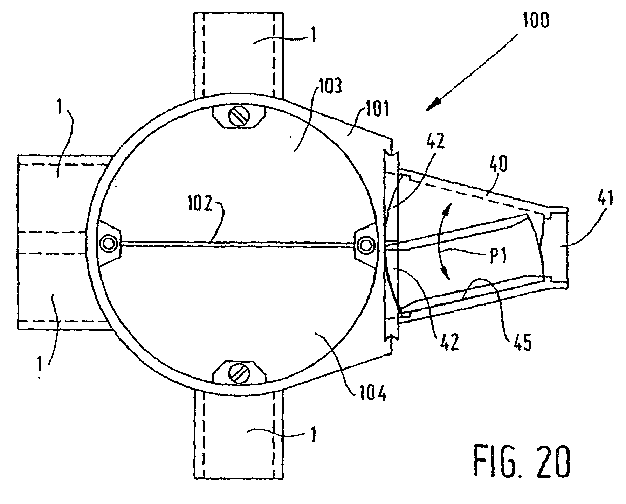

With the assemblies shown in Figures 3 - 6 the closing devices by means of which ports 4 can be closed are located within the box. The advantage of this is that the manner in which the various conduits are interconnected is clearly visible, also after the box has been mounted in a wall or a ceiling. The external shape of the box corresponds with the external shape of boxes that are known per se, so that the mounting of the two boxes can take place in the same manner. It is also possible, however, to mount the closing device on the outside of the box, thus leaving more space in the box for wires. Assemblies provided with ports comprising closing devices positioned outside the boxes will be explained in more detail with reference to Figures 20 - 23 for example.

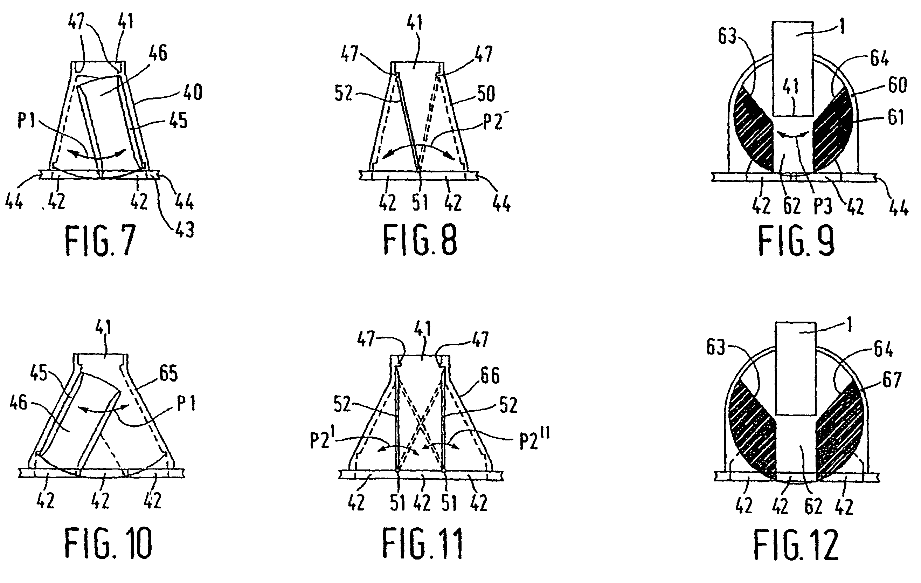

Figures 7 - 13 show ports which are in particular suitable for being mounted on the outside of a box. The ports and closing devices shown in Figures 16 - 19 are suitable for being mounted on the inside as well as on the outside of the box.

The port 40 shown in Figure 7 is spigot-shaped, whereby port 40 comprises a single passage 41 in a narrower portion, and two apertures 42 on the side of the other, wider portion, which open into different chambers in a box. Port 40 is provided near its side comprising aperture 42 with a plate 43, which comprises dovetailed notches 44 on either side. Port 40 can be fixed in a recess provided in the box by means of plate 43, whereby the dovetailed notches 44 are brought into engage ment with the edges bounding said recess.

Port 40 is provided with a tubular closing device 45, which is capable of tilting movement in directions indicated by double arrow PI. In the position of closing device 45 shown in Figure 7 passage 41 is in open communication with right-hand aperture 42 via channel 46 in closing device 45. Left-hand aperture 42 is shut off from passage 41 by closing device 45. Passage 41 is provided with flanges 47, against which closing device 45 abuts.

Figure 8 shows a port 50 according to the invention, which is provided with a closing plate 52, rather than with a closing device 45, which closing plate 52 pivots about a pivot pin 51. Closing plate 52 can pivot in directions indicated by double arrow P2, whereby the position of closing plate 52 in which passage 41 is in open communication with the right-hand aperture 42 is illustrated in full lines, and whereby the position of closing plate 52 in which passage 41 is in open communication with the left-hand aperture 42, whilst the passage to right-hand aperture is closed, is illustrated in dotted lines.

Figure 9 shows a port 60 according to the invention, which is provided with a disc 61 which is capable of rotating movement about an axis. Disc 61 comprises a tubular passage 62, which diverges in the shape of a V on one side facing passage 41, and which is bounded by walls 63, 64 on either side. In order to bring passage 41 into open communication with the right-hand aperture 42, disc 61 is rotated in the direction indicated by double arrow P3, until wall 64 abuts against conduit 1. At the same time left-hand aperture 42 is close by disc 61. If disc 61 is rotated in the opposite direction, an open communication will be effected between left-hand aperture 42 and passage 41, whilst right-hand aperture 42 will be closed. The ports 65, 66, 67 illustrated in Figures 10, 11 and 12 correspond with ports 40, 50, 60 respectively illustrated in Figures 7, 8, 9 respectively, whereby ports 65, 66, 67 comprise three apertures 42 instead of two.

The port 66 shown in Figure 11 comprises two closing plates 52 instead of one, which closing plates are each capable of individual pivoting movement about pivot pins 51, in directions indicated by double arrows P2', P''.

Figure 13 shows a port 70 according to the invention, which comprises one passage 41 and two apertures 42. A elastically deformable conduit 71 is connected to passage 41, which conduit can be buckle from the position illustrated in Figure 13, in which passage 41 is in open communication with left-hand aperture 42, to a position in which passage 41 is in open communication with right-hand aperture 42. Said buckling of conduit 71 may be effected with a screwdriver 72, for example.

Figures 14A and 14B are a longitudinal sectional view and a front view respectively of a port 75 according to the invention, which comprises two apertures 42. Figures 15A and 15B are a longitudinal sectional view and a front view respectively of a port 76, which comprises four apertures 42, whilst Figures 16A and 16B are a longitudinal sectional view and a front view respectively of a port 77, which comprises three apertures 42. It is possible to have one of the apertures 42 open under a box and connect it directly to a conduit 1. Ports 75, 76 and 77 each comprise a single passage 41. Plate 43, in which apertures 42 are provided, comprises an aperture 78 which is in line with passage 41, in which aperture a closing device 79 is positioned. Closing device 79 extends from aperture 78 to within passage 41. Closing device 79 is provided with an elongated tubular element 80, which is longitudinally formed with a slot 81. A filling piece 82 provided with a curved slot 83 is positioned within tubular element 80. The parts of closing device 79 are shown in more detail in Figures 17A-D, with Figures 17A and C being front views and Figures 17B and D being side views. Slot 83 opens into passage 41 on one side, and at its side remote from passage 41 it opens near plate 43. Closing device 79 is rotatable in directions indicated by double arrow P4, whereby slot 83 opens in one of the apertures 42 near plate 44 in dependence on the position of closing device 79. In the position of closing device 79 shown in Figure 14A slot 83 opens into the upper aperture 42. With the port 76 shown in Figure 15A-a tubular member 84 is positioned between apertures 42 and passage 41, which is provided on four sides with oval apertures 85, into which slot 83 can open. Tubular member 84 may also comprise rectangular recesses 86, as is shown in Figure 16A. It is also possible to remove the entire closing device 79 from the port and to replace it by a short tube, through which aperture 78 is brought into open communication with passage 41, and which may serve to pass wires therethrough.

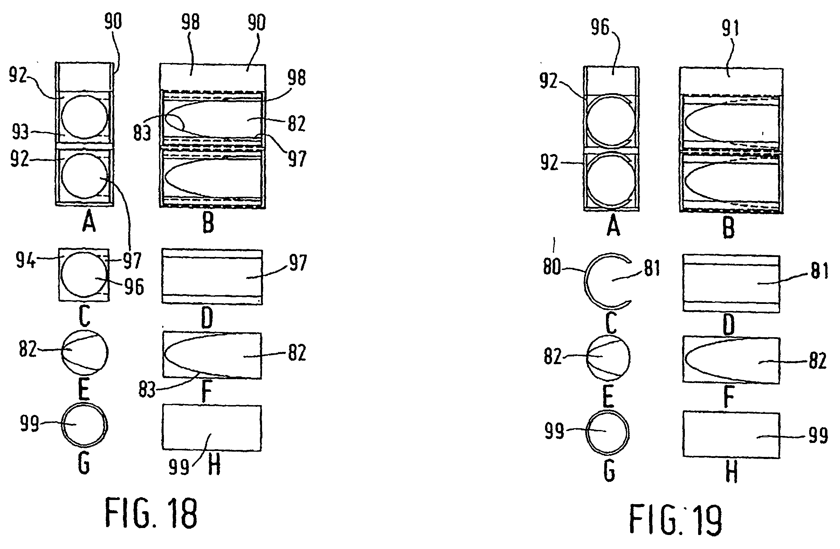

Figures 18A-H and 19A-H show ports 90, 91 according to the invention, which are provided with a rectangular frame comprising square passages 92. Each passage 92 is provided with a closing device 93. Closing device 93 comprises a tubular member 94 shown in Figures 18C and D, which has a square outside shape to fit passage 92. Member 94 comprises a cylindrical passage 96 and a slot 97 extending along one longitudinal side of member 94. A filling piece 82 is positioned within member 94, whereby slot 83 provided in filling piece 82 opens into slot 97. The side walls 98 of port 90 are provided with recesses which are positioned opposite slot 83. Slot 83 opens on the left-hand side or on the right-hand side of the port 90 shown in Figure 18A, depending on the manner in which member 94 is slid into square passage 92. It is also possible to fit a tube 99 in passage 96 instead of filling piece 82, as a result of which a straight passage through port 90 is obtained.

The port 91 that is shown in Figures 19A-H is different from port 90 in that a tubular element 80 is used instead of a member 94 for fixing element 82 or tube 99.

Figure 20 shows an assembly 100 according to the invention comprising a box 101 which is divided into two chambers 103, 104 by means of a partition 102. At least two conduits 1 open into each chamber 103, 104. Assembly 100 comprises a port 40 as shown in Figure 7 near one side. Aperture 41 is in open communication with chamber 103 or with chamber 104, depending on the position of closing device 45.

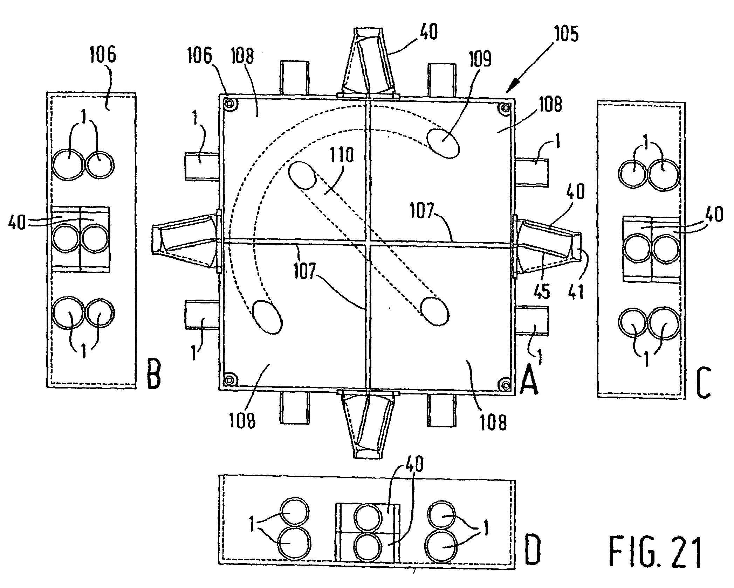

Figure 21 shows an assembly 105 according to the invention, which comprises a square box 106, into which a number of conduits 1 open. Box 106 is divided into four chambers 108 by means of two partitions 107 extending transversely to each other. A port 40 as shown in Figure 7 is provided near each end of partitions 107. Aperture 41 is in communication with one of the chambers 108, depending on the position of closing device 45. In the embodiment shown in Figure 21 left-hand top chamber 108 and right-hand bottom chamber 108 are used for wires carrying 220 V, whilst the bottom left and top right chambers are used for a network which operates on 12 V, for example. The chambers belonging to the same network are interconnected by means of conduits 109 and 110 respectively.

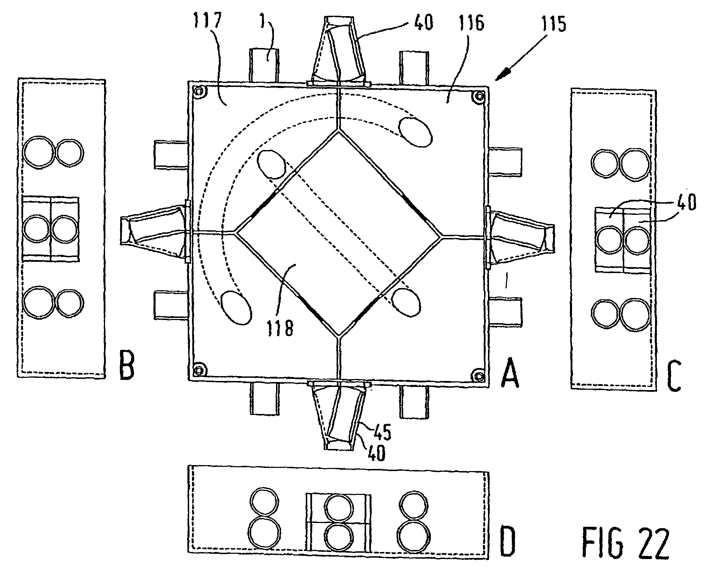

Figures 22A-D show an assembly 115 according to the invention comprising a box 116 which is divided into five chambers. Four chambers are in communication with conduits 1, and each of said four chambers is connected to two ports 40 provided with movable closing devices 45. Chambers 117 bound a central chamber 118, which may for example accommodate electronics, by means of which the network operating on low voltage current and the network operating on high voltage current are coupled.

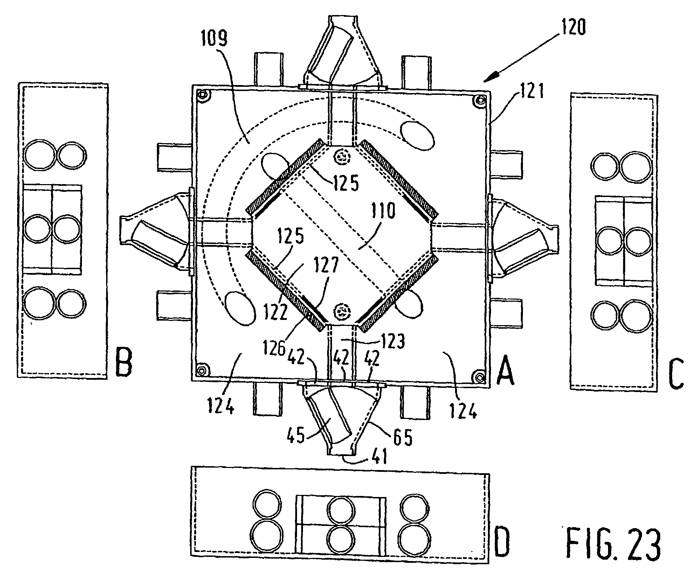

Figures 23A-D show an assembly 120 according to the invention comprising a box 121 which is divided into five chambers. A central chamber 122 is in communication with ports 65 as shown in Figure 10 via conduits 123. By means of the triple port 65 passage 41 can be brought into open communication with a chamber 124 on the right of conduit 123 or with a chamber 124 on the left of conduit 123, or, via conduit 123, to chamber 122, depending on the position of closing device 45. Longitudinal sides 125 of chamber 122 are provided with printed circuit boards 126 comprising electronics to be connected to wires present within chambers 124. If desired it is also possible to realise a connection with wires present in chamber 122 via removable slides 127. In this way it is possible to couple an electronic module in assembly 120 to different networks.

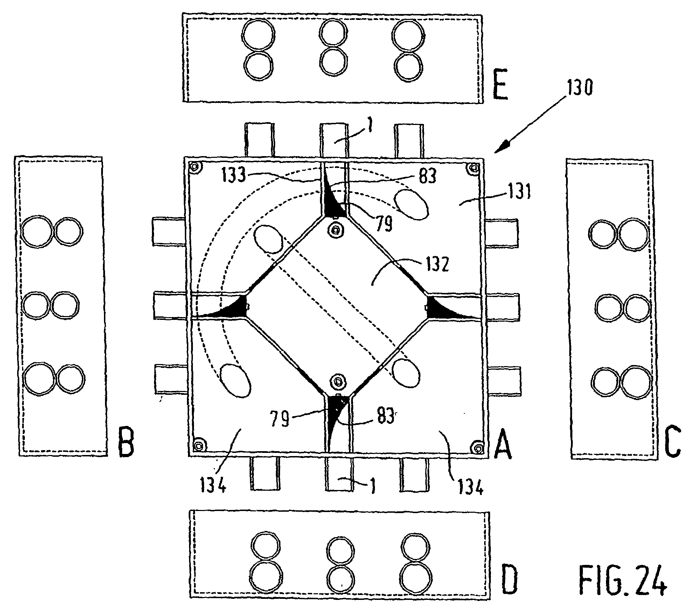

Figures 24A-E show an assembly 130 according to the invention comprising a box 131 which is divided into five chambers. Conduits 133 extend from a central chamber 132 to conduits 1 adjoining box 131. Positioned within each conduit 133 is a closing device 79, as described with reference to Figures 14 - 17. Conduit 1 is in communication with a chamber 134 on the left of conduit 133 or with a chamber 134 on the right of said conduit 133, depending on the position of,the channels 83 in closing device 79. Closing device 79 can be rotated in directions P4 indicated in Figure 14, for example by means of a screwdriver. It is also possible to remove closing device 79 and replace it by a tube which fits in conduit 133, as a result of which central chamber 132 comes into open communication with a conduit 1.

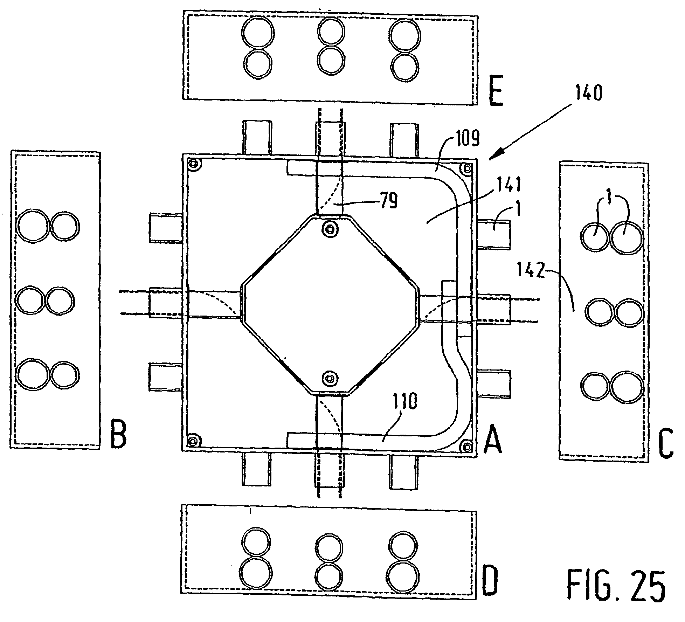

Figures 25A-E show an assembly 140 according to the invention comprising a box 141 which is divided into a number of chambers, and conduits 1 connected thereto. Box 141 is provided with conduits 109, 110, which interconnects mutually separated chambers. Conduits 109, 110 are located in a portion 142 of box 141 into which no conduits 1 open.

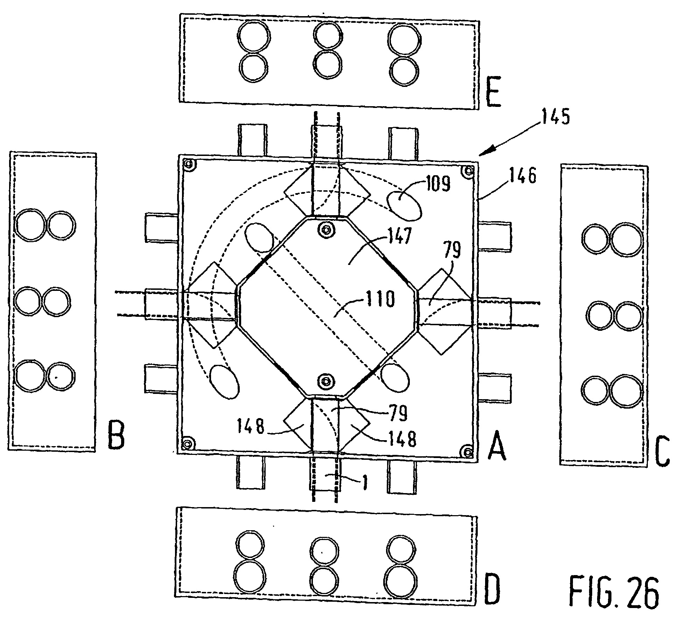

Figures 26A-E show an assembly 145 according to the invention comprising a box 146 which is divided into a number of chambers. Closing devices 79 can be rotatably operated from a central chamber 147, as a result of which a chamber on the left of closing device 79 or a chamber on the right of closing device 79, depending on the position of closing device 79, is brought into open communication with a conduit 1. Each chamber is provided near closing device 79 with a guide element 148 for correctly guiding the wires extending through the port.

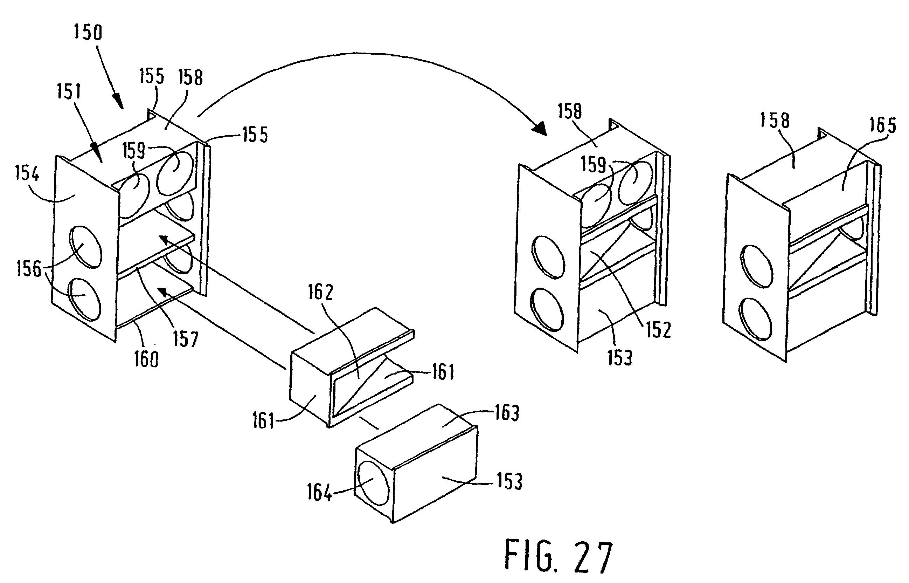

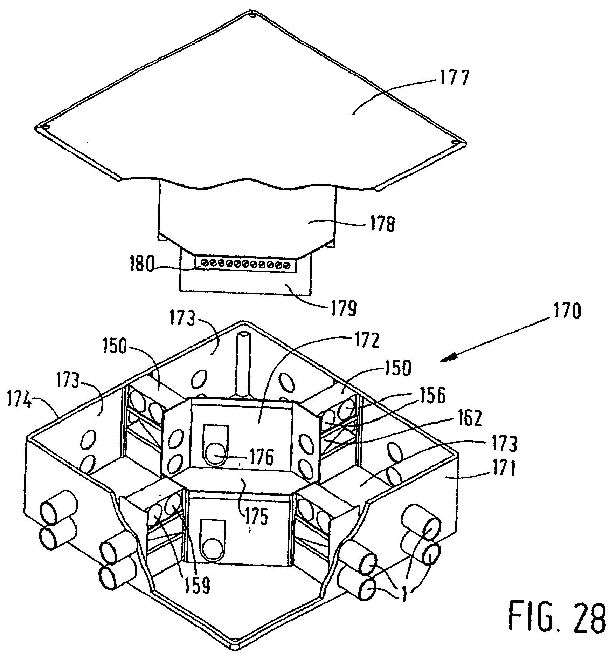

Figure 27 shows a port 150 according to the invention, which comprises a holder 151 and closing devices 152, 153 which can be mounted within said holder. Holder 151 comprises two spaced-apart fastening plates 154, which are each provided on either side with flanges 155 that fit in slots. Two passages 156 extend between plates 154, which are separated from each other by a plate 157. A block-shaped element 158, in which passages 159 extending transversely to passages 156 are present, extends on an upper side of holder 151. Holder 151 is provided on a bottom side with a plate 160 connecting plates 154. Closing devices 152 and 153 can be slid into the space bounded by element 158 and plate 157 and into the space bounded by plates 157 and 160. Closing device 152 comprises four walls 161 extending parallel and transversely to each other, and one plate 162 disposed diagonally within closing device 152. Closing device 153 comprises a rectangular block 163, in which a tubular passage 164 is provided. Depending on the way in which closing device 152 is slid into holder 51, a passage 156 is closed on one side and brought into open communication on the other side with a chamber on the left of port 150 or with a chamber on the right of port 150 (see Figure 28). when closing device 153 is used, a rectilinear passage through port 150 is obtained. Passages 159 in block 158 may be left out, if desired, as a result of which closed walls 165 are obtained.

Figure 28 shows an application of the port 150 shown in Figure 27. An assembly 170 according to the invention comprises a box 171, which is divided into a number of mutually separated chambers 173 by means of a number of partitions 172. Partitions 172 are connected to outside walls 174 of box 171 via ports 150. A conduit 1 is in communication with a chamber on the right or on the left of port 150, or with a central chamber 175, depending on whether closing device 152 or closing device 153 is provided in port 150, and depending on the position of closing device 152. Communication between chambers 173 adjoining each other can be effected via apertures 159 in port 150. Each partition 172 is provided with a removable slide 176, via which each chamber 173 can be brought into open communication with central chamber 175. Box 171 can be closed by means of a cover 177. Cover 177 comprises a central auxiliary cover 178, by means of which central chamber 175 can be closed. Flanges 179, which are provided with electric terminals 180, extend transversely to auxiliary cover 178.

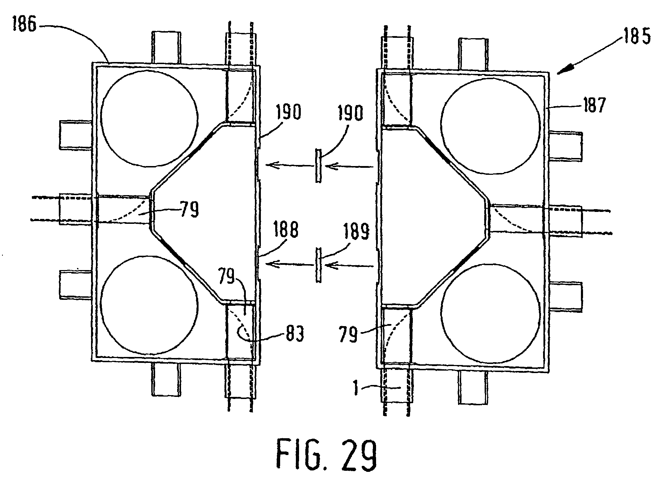

Figure 29 shows an assembly 185 according to the invention, which is built up of two boxes 186, 187, which can be coupled together. Said boxes are identical to each other and can be attached together by means of slides 189 to be fitted in slots 188, as a result of which walls 190 of boxes 160, 187 will abut against each other.

It will be apparent that it is possible to design all the above boxes in such a manner that they can be coupled together in all three dimensions. The boxes can be stacked as well as be mounted in side-by-side relationship, therefore.

It will be apparent that it is also possible, for example with the assembly 105, 115 shown in Figure 21 or 22, to use port 50, 60 or 70 instead of port 40. Similarly it is also possible to use port 66 or 67 instead of port 65 with the assembly shown in Figure 23.

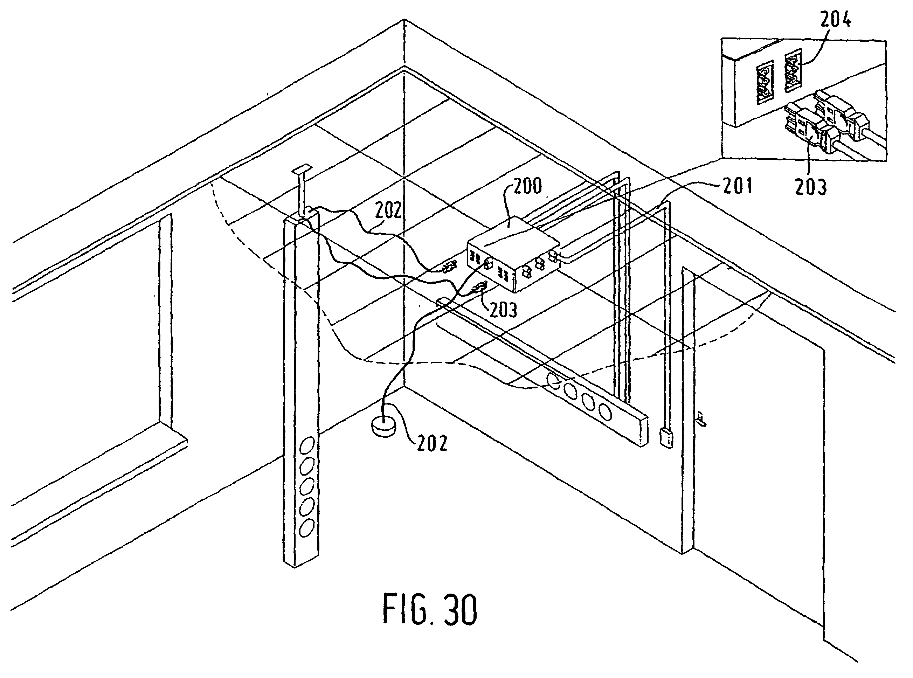

Figure 30 shows a room with an assembly 200 according to the invention fitted in the ceiling, to which conduits 201 and wires 202 are connected. Wires 202 are provided with plugs 203, which are inserted into sockets 204 provided in the box.

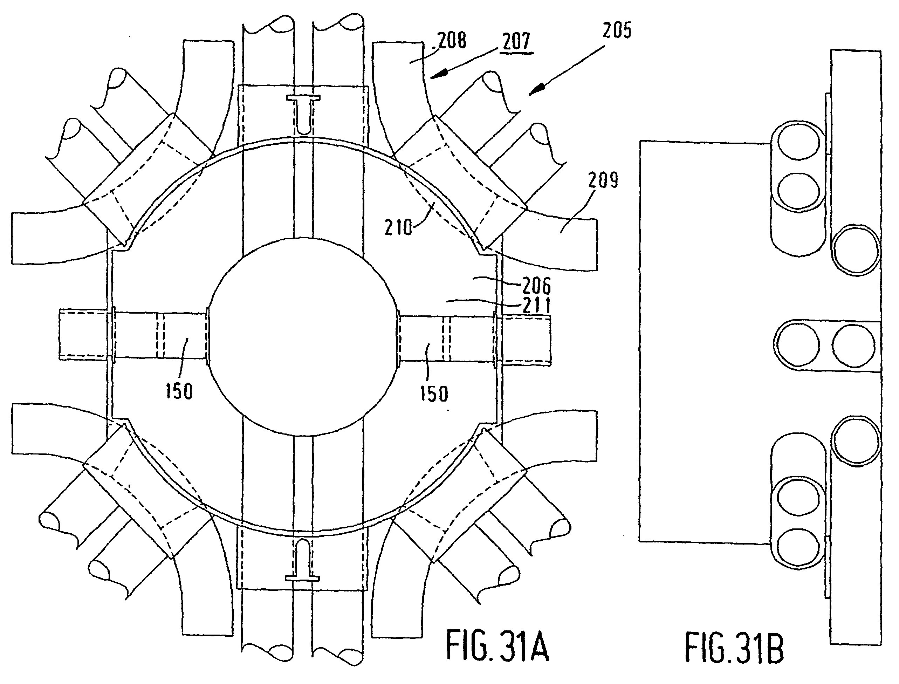

Figures 31A and B show a plan view and a side view respectively of an assembly 205 according to the invention, which is provided with a box 206 comprising a number of ports 150. Box 206 is furthermore provided with a number of conduits warping through the box. Each conduit 207 comprises two tube portions 208, 209, and a tubular portion 210 interconnecting tube portions 208, 209. Tube portions 208, 209 and tubular segment 210 extend along one and the same radius of curvature and form a through conduit. Tubular segment 210 is removed in dependence on the desired use, so that a wire present in tube portion 208 can be pulled into a chamber 211 of box 206, and be connected to other wires present therein. If such a connection is not desired, tubular segment 210 may continue to form part of conduit 207, as a result of which an uninterrupted passage from tube portion 208 to tube portion 209 remains ensured.

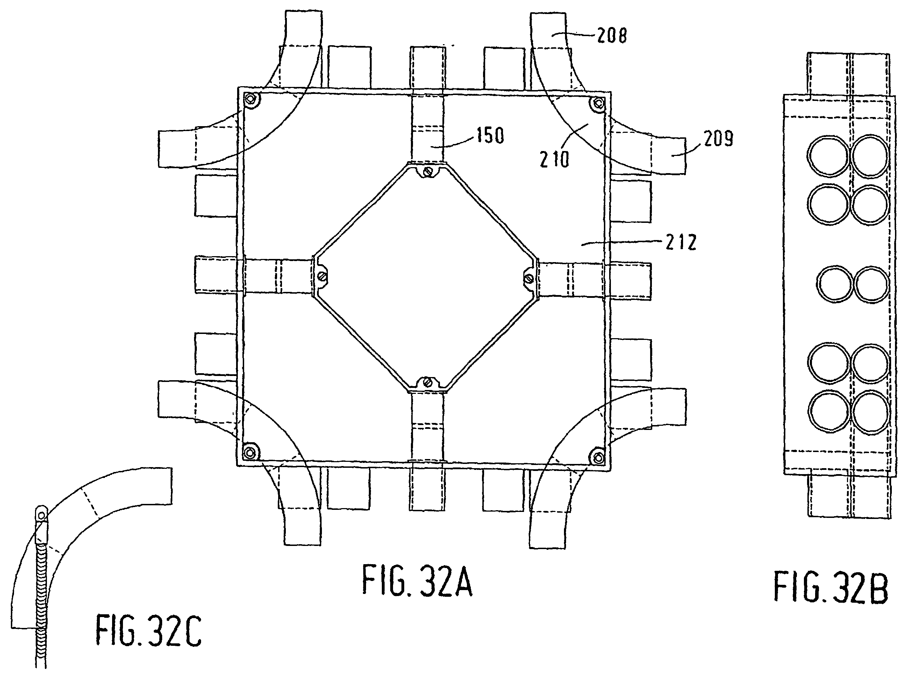

Figures 32A-32C show a similar box 212, which is likewise provided with a curved conduit 207 comprising a tubular porti on 210 detachably accommodated therein.

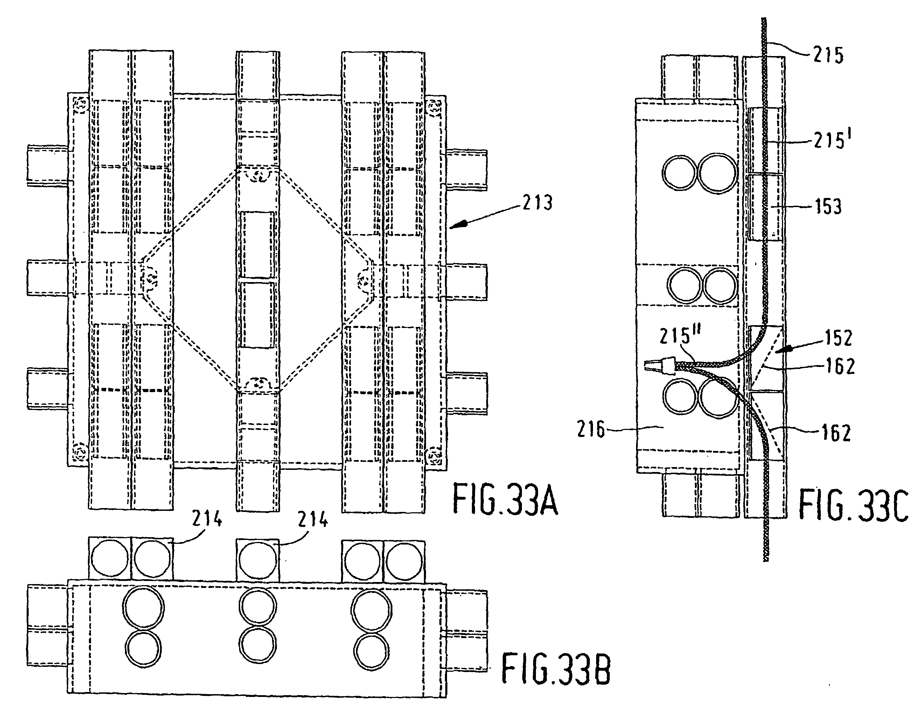

Figures 33A-33C are a plan view and side views respectively of a box 213 according to the invention, which is provided with a number of through conduits 214 positioned on a side of the box facing away from the chambers. Said through conduits are fitted with provisions for placing a closing device 152 or 153 as shown in Figure 27, depending on the desired use. Depending on the desired use, a wire 215 may extend under the box (see 215') or be guided into a chamber 216 of box 213 (see 215''). Since it is not absolutely necessary to pass wire 215 through box 213, the drawing of the wires is relatively easy.

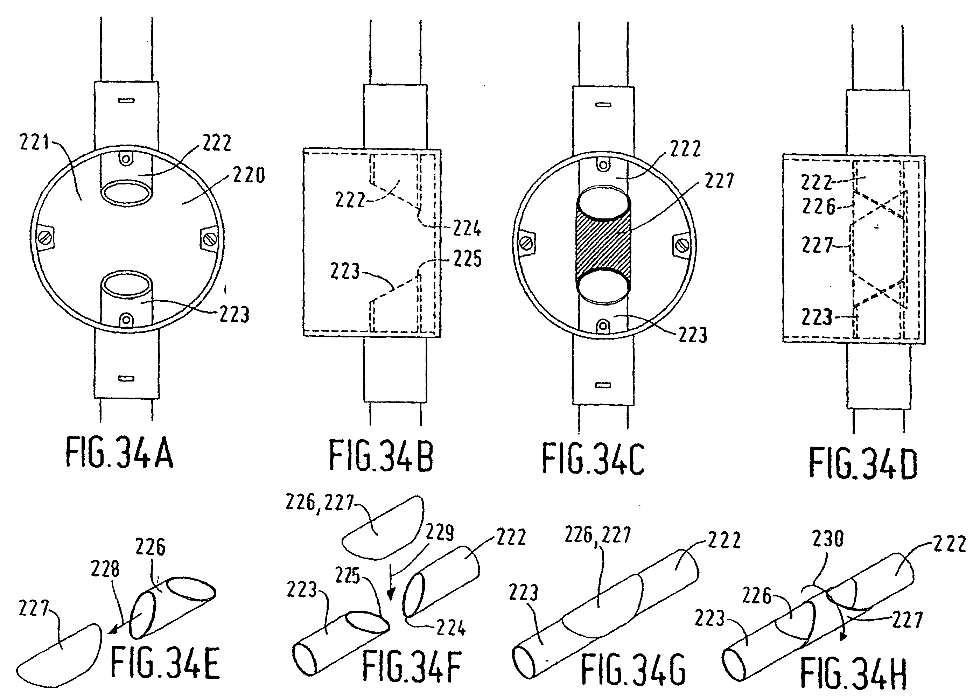

Figures 34A-H show another embodiment of an assembly 220 according to the invention, which is provided with a box 221 and two tube portions 222, 223 opening into said box. Tube portions 222, 223 are in line. The ends of tube portions 222, 223 are bevelled, with the tips 224, 225 extending toward each other. Assembly 220 is furthermore provided with two tube portions 226, 227 concentrically surrounding each other, whereby the inside diameter and the outside diameter of tube portions 226 correspond with the inside diameter and the outside diameter of tube portions 222, 223, and tube portion 227 surrounds tube portion 226. The ends of tube portions 226, 227 are bevelled at the same angle as tube portions 222, 223. Tube portion 226 is moved into tube portion 227 in the direction indicated by arrow 228 so as to interconnect tube portions 222, 223. Then tube portions 226, 227 are jointly moved in the direction indicated by arrow 229, whereby the bevelled ends come to abut against one another (see Figure 34G). Then tube portion 227 is rotated in the direction indicated by arrow 230, as a result of which tube portion 226 is undetachably connected to tube portions 222, 223, and tube portions 222, 223, 226 form an elongated tube (see Figure 34H, 34D). If the chamber present in box 220 is not needed for fitting a sensor switch or plug socket, tube portions 226, 227 will provide a through conduit. If it is desired to fit a sensor or the like in box 221, the wire present in tube portions 222, 223 must be removed, after which tube portions 226, 227 can be removed by rotating tube portion 227 in a direction opposed to the direction indicated by arrow 230 and subsequently moving tube portions 226, 227 in a direction opposed to the direction indicated by arrow 229. Then a wire can be provided in tube portions 222, 223 again, which wire may extend to within box 221, whilst the desired sensor or the like may be connected to said wire.

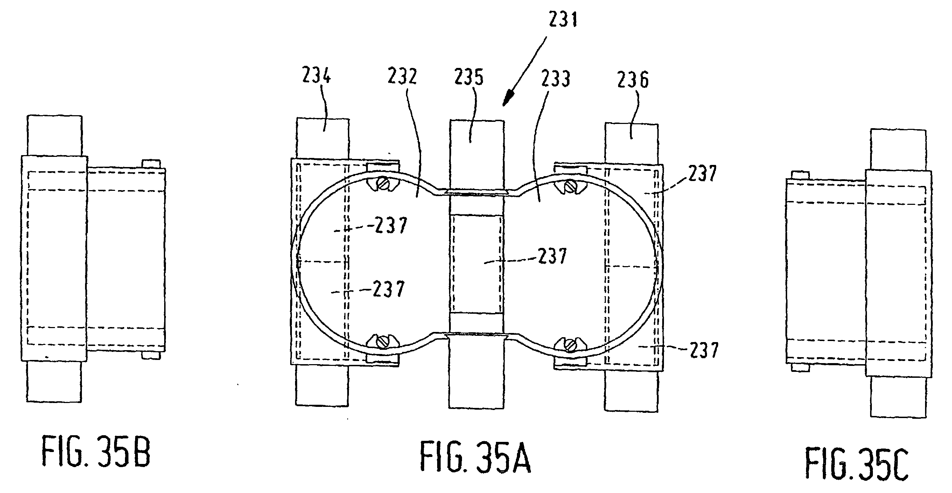

Figures 35A-C show an assembly 231 according to the invention which is provided with two chambers 232, 233 arranged in adjoining relationship, through which conduits 234-236 extend. Said conduits are provided with closing devices 237, which, depending on the desired use, provide access to chambers 232, 233 from conduits 234-236, or which form a direct passage from conduits 234-236 through assembly 231.

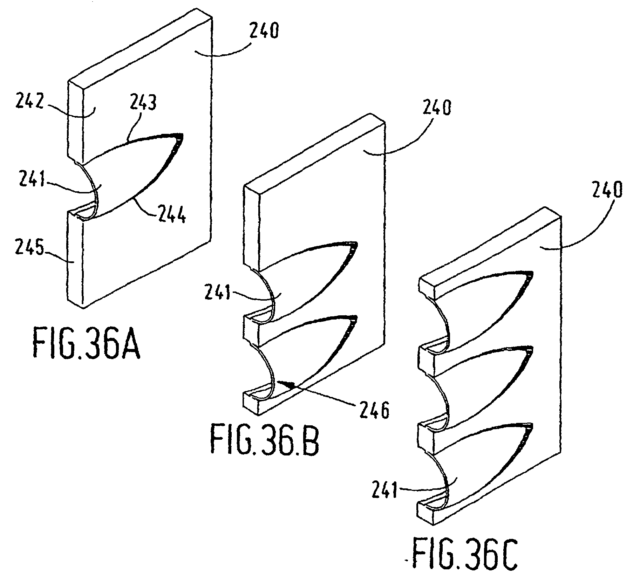

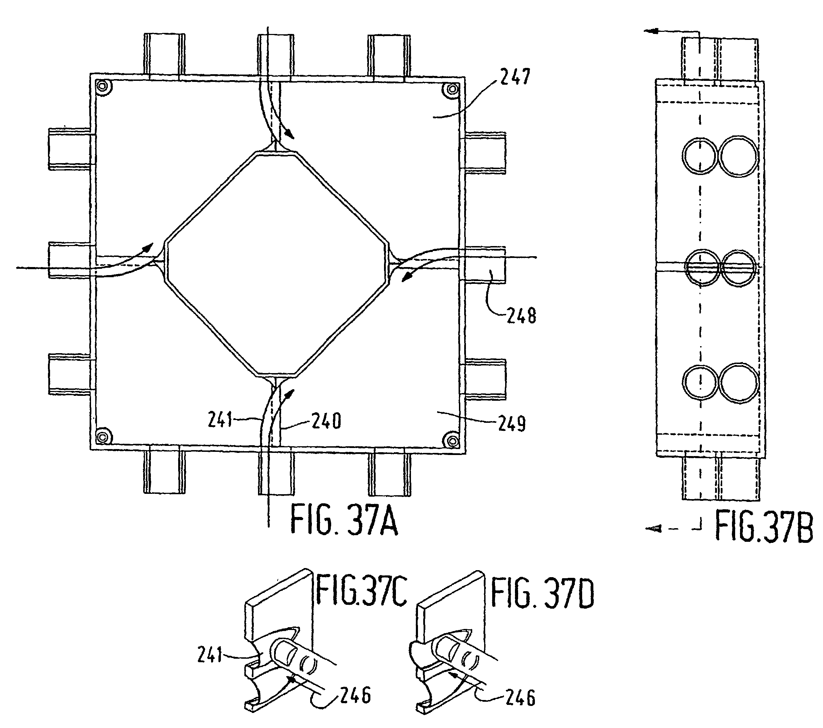

Figures 36A-36C show closing devices 240 according to the invention, which are provided with respectively one, two or three elastically deformable, preferably plastic membranes 241. Closing device 240 furthermore comprises a plate 242, in which the side edges 243, 244 of membrane 241 are secured. Said side edges are in contact with each other on one side of membrane 241, whilst on the other side of the membrane, near edge 245 of plate 242, said side edges 243, 244 are spaced apart. Near edge 245 of plate 242-a membrane 241 is semi-circular, seen in side view. When a force is exerted on membrane 241 in the direction indicated by arrow 246, the membrane will pivot about side edges 243, 244 and the semi-circular cross-section will now be positioned (see Figures 37C, 37D) on the left-hand side of plate 242 instead of on the right-hand side shown in Figure 36.

Figures 37A-D show an assembly 247 according to the invention which comprises four closing devices 240, by means of which access can be provided from conduits 248 to a chamber 249 positioned to the left or to the right of a conduit 248, depending on the position of membrane 241.

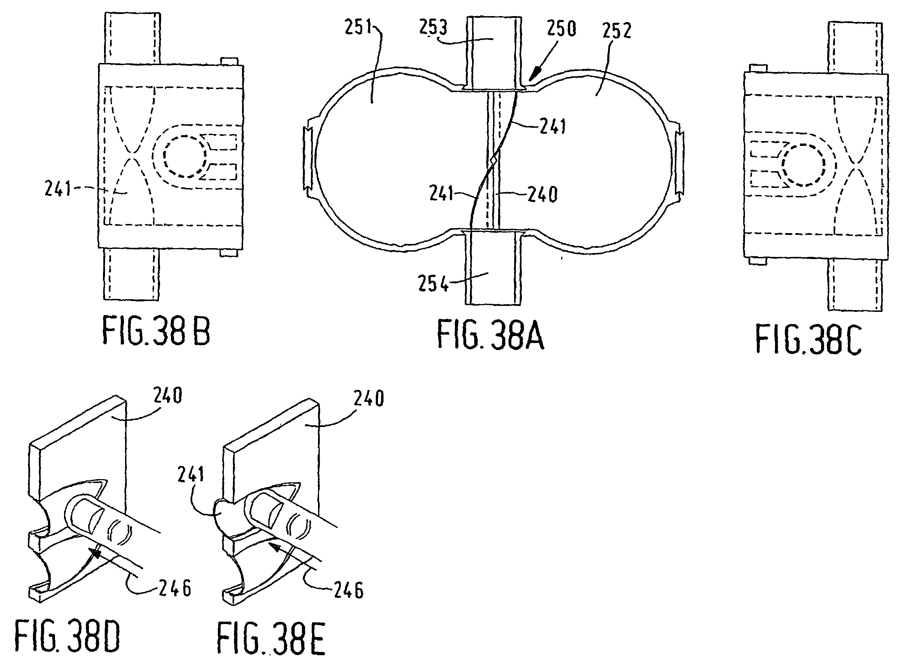

Figures 38A-E show an assembly 250 according to the invention, which comprises two chambers 251, 252 and two aligned ports 253, 254. Each port 253, 254 is provided with a closing device 240, whereby said ports open into different chambers or can be brought into communication with each other, depending on the position of membrane 241 of closing device 240.

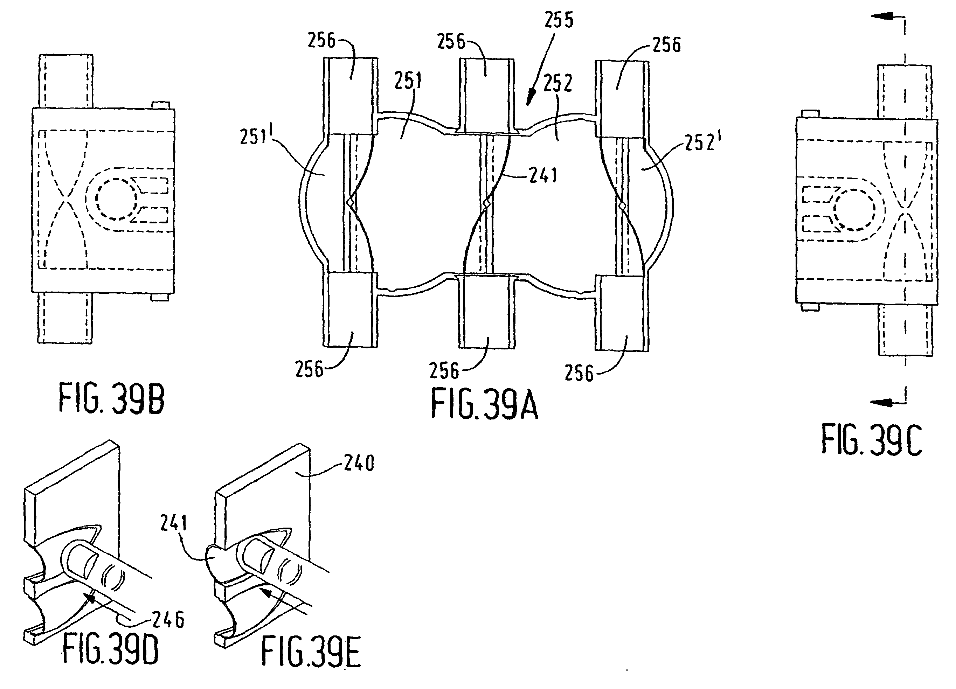

Figures 39A-E show an assembly 255 according to the invention, which comprises four chambers 251, 251', 252, 252' and six ports 256 opening into said chambers, which ports are arranged opposite each other in pairs. Each port 256 is provided with a closing device 240 comprising a membrane 241, whereby a port 256 can be brought into communication with a chamber 251, 251', 252, 252', depending on the position of membrane 241. The ports 256 positioned on the left-hand side and on the right-hand side of chambers 251 and 252 respectively can be interconnected via relatively small chambers 251' and 252', as is illustrated in the left-hand portion of Figure 39A.

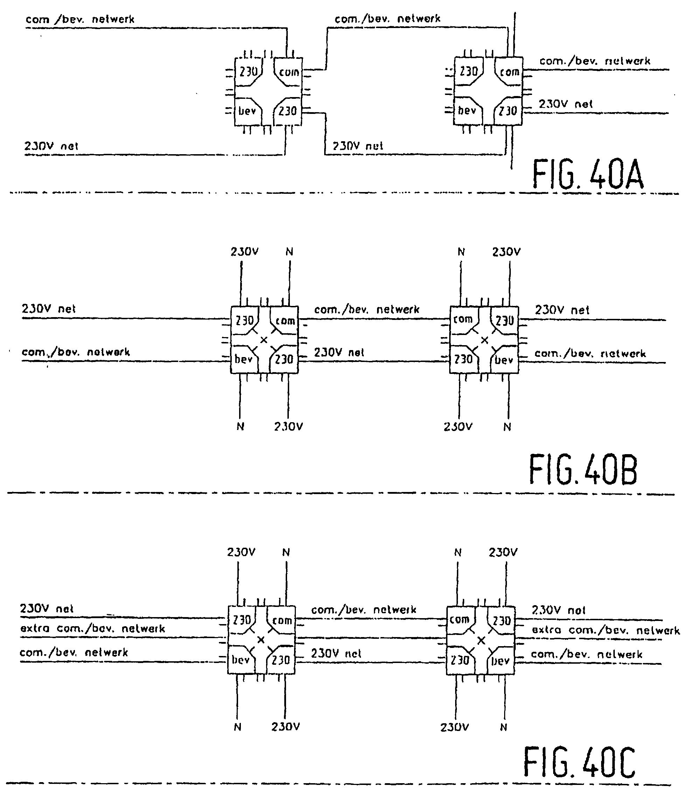

Figures 40A-F show various uses of the boxes shown in the preceding Figures, illustrating various lay-outs for conduits connected to the boxes.

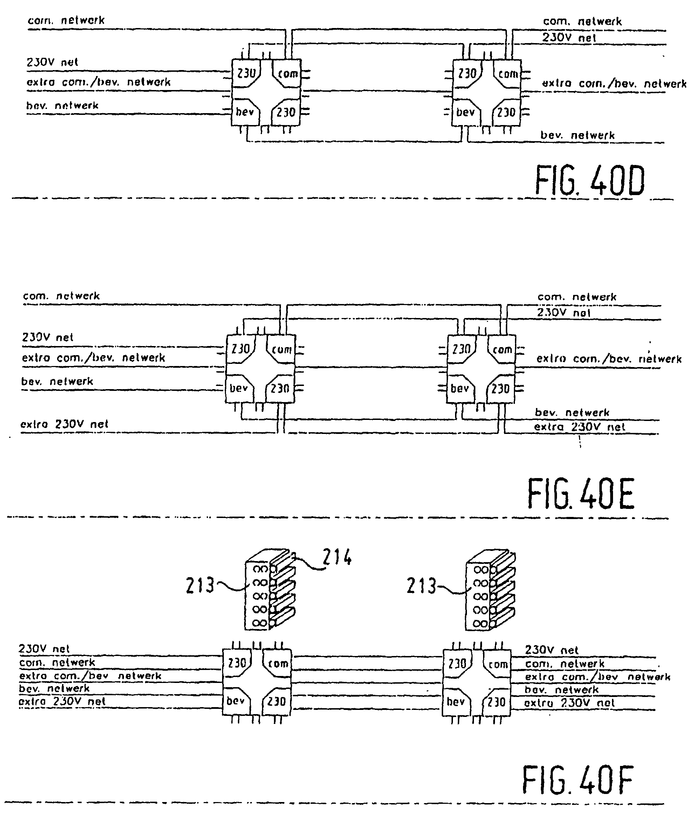

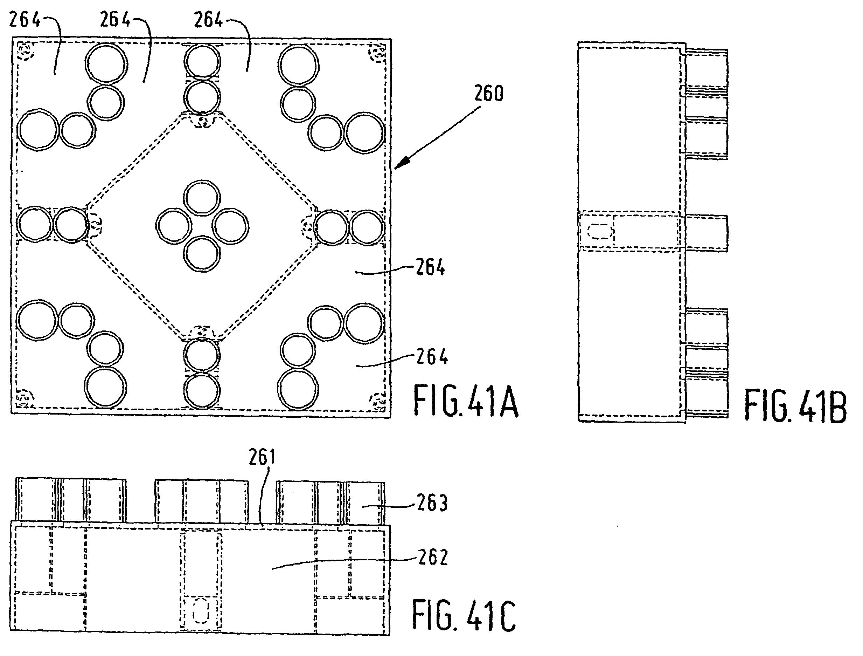

Figures 41A-C show an assembly 260 according to the invention, which comprises conduits 263 extending transversely to the bottom plate 261 of box 262. The conduits 263 opening into the box are provided with a closing device as shown in any one of the preceding Figures, whereby the closing device provides access to one of the chambers 264 from conduit 263, depending on its position.

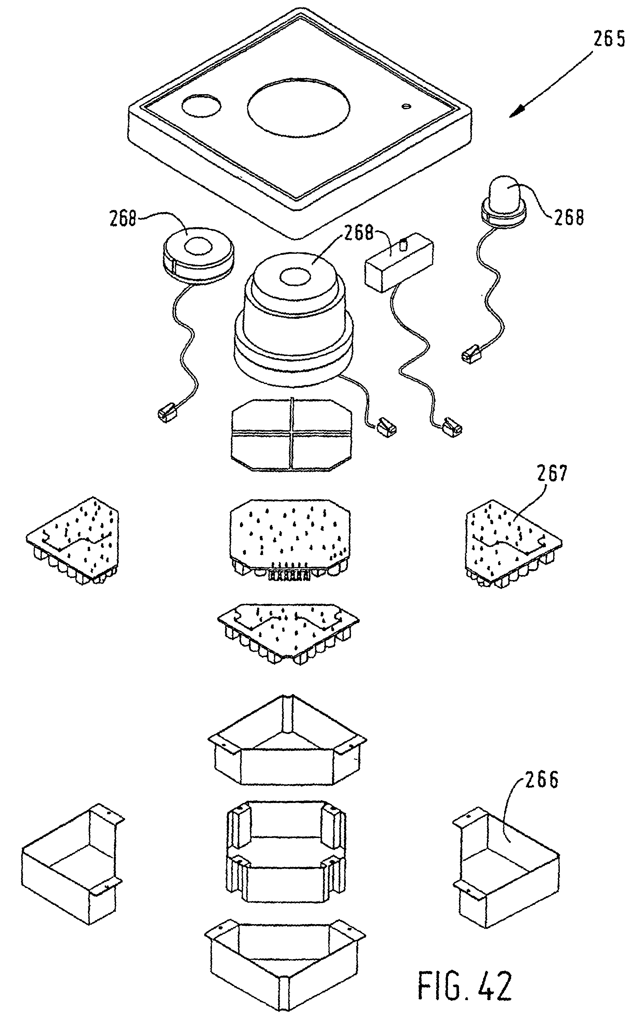

Figure 42 is a perspective exploded view of an assembly 265 according to the invention, wherein wires present in each chamber 266 are connected to an electronic circuit 267 associated with the respective chamber 266. Furthermore a sensor or switch 268 or the like is connected to each electronic circuit.

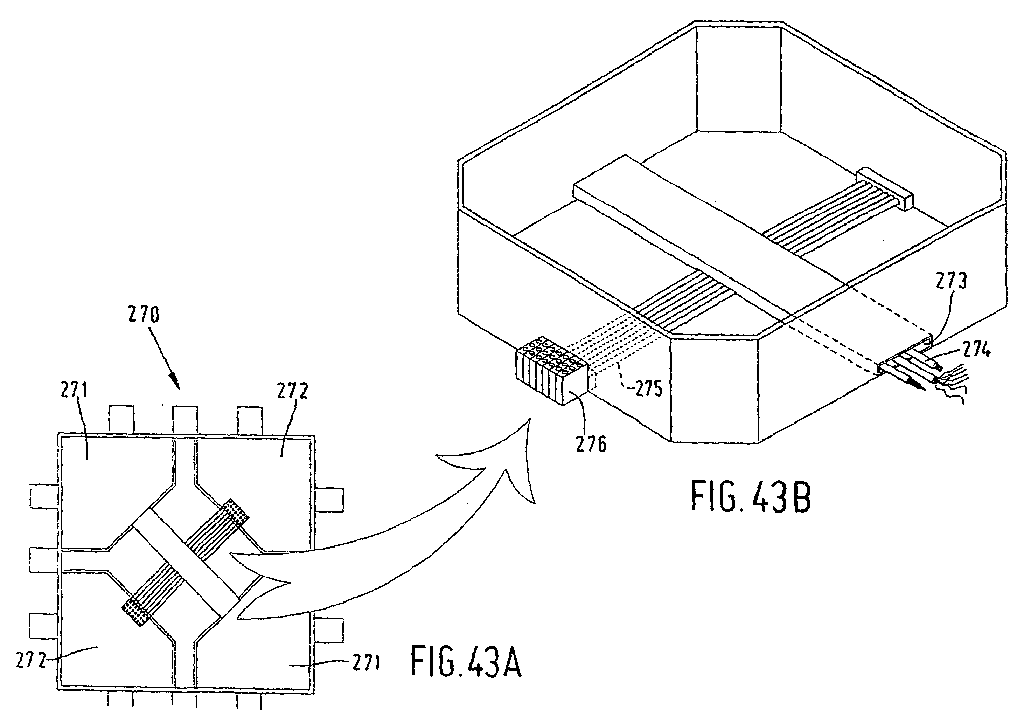

Figures 43A-B are a plan view and a perspective view respectively of an assembly 270 according to the invention, which comprises a number of chambers 271, 272. The diametrically opposite chambers 271 are interconnected via a rectangular, duct-shaped channel 273, through which low voltage wires 274 can be passed. The diametrically opposite chambers 272 are interconnected by means of a number of wires 275, for example of copper, which are connected to connectors 276. Chambers 272 are preferably used for connecting high voltage wires, whereby it is relatively easy to interconnect the diametrically opposite chambers 272 by means of connectors 276 and copper wires 275.

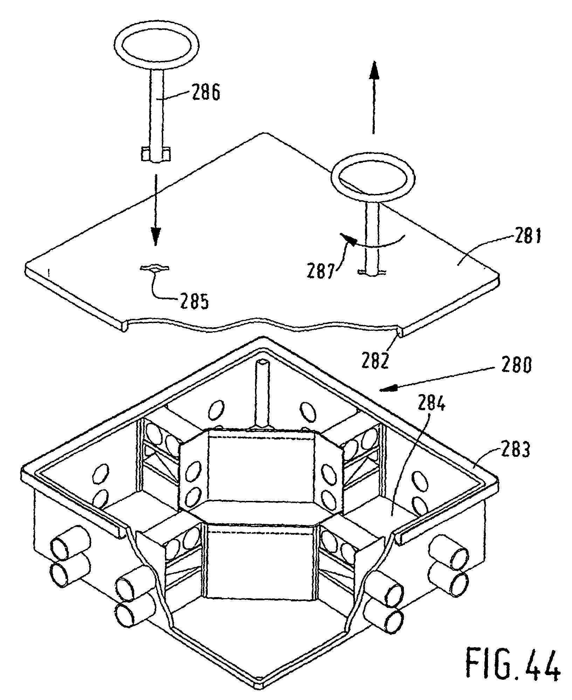

Figure 44 shows an assembly 280 according to the invention, which is provided with a cover 281, which can be clamped down in slots 283 of box 284 by means of edges 282. In order to enable the removal of cover 281, said cover 281 is provided with two slotted openings 285, into which an appropriate tool 286 can be inserted. After said tool has been rotated through 90' in the direction indicated by arrow 287, cover 281 can be pulled from box 284. In this manner it is possible to make the box practically entirely flat, so that it is possible to hide the box practically completely from view.

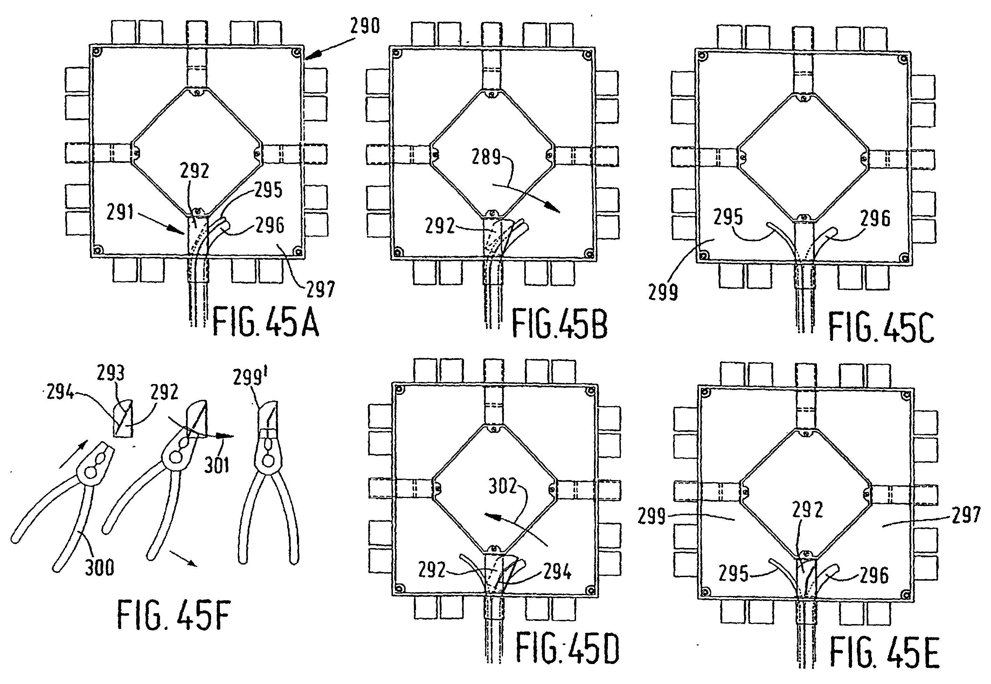

Figures 45A-E show an assembly 290 according to the invention, which comprises a port 291, in which a closing device 292 can be placed. As will be apparent from Figure 45F, closing device 292 is provided with two pivotally interconnected wall parts 293, 294, whereby closing device 292 provides access to a single chamber (see Figure 45A) or to two chambers adjoining one another (see Figure 45E), depending on the position of wall part 294. Such a closing device is suitable for those applications wherein use is made of two (or more) longitudinally interconnected wires 295, 296. When wires 295, 296 are inserted into assembly 290, closing device 292 is held in the position shown in Figure 45A. The wires 295, 296 are thus guided into one chamber 297 of assembly 290. If the wires are to be connected to different networks, closing device will then be tilted in a direction indicated by arrow 298, as is shown in Figure 45B. To this end closing device 292 is provided with a rounded end 299'. After closing device 292 has been removed, wires 295, 296 are partially divided and wire 295 is guided into another chamber 299 of assembly 290.

Then the closing device 292, which has been removed from assembly 290, is taken hold of by means of a tool 300, whereby wall part 294 is bent over in a direction indicated by arrow 301 to the position illustrated in the right-hand part of Figure 45F. Following that thus adapted closing device 292 is inserted into port 291 again and rotated in the direction indicated by arrow 302 (see Figure 45D) until closing device 292 occupies the position shown in Figure 45E and wires 295, 296 are present in chambers 297, 299, which are electrically separated from each other by means of closing device 292.

Each of the above ports has specific advantages and disadvantages, whereby a particular port will be selected in dependence on its particular use. The differences between the ports concern for example the number of apertures to be selected, the number of conduits to be connected one above the other, the possibility to inspect the position of the closing device visually, the possibility to change the path of the wires once they have been installed, the access to the closing device after the box has been mounted in or on a wall or a ceiling, the manner in which the closing device can be changed over, the electrical insulation of the various chambers with respect to each other, the required amount of space per closing device, etc.

The box may also be fitted in or on a wall, with the sensors and/or control buttons mounted on the box.

## Claims

1. An assembly (2, 6) for coupling wires, which assembly is provided with a box (3, 21) comprising chambers, which box comprises at least three ports (4, 40, 50, 60) and one closing device, by means of which the connection from one port to at least one of the other ports can be closed, **characterized in that** the box comprises at least two chambers (23-27), which each comprise at least one of said ports (4, 40, 50, 60), whereby the assembly is furthermore provided with a port comprising said closing device (30, 45; 62, 60), which port is provided on one side with at least two apertures (42) opening into different chambers in the box, and which is provided on a side facing away from the box with a single passage (41), whereby the closing device (30, 45) can be moved at least from a first position, in which said passage (41) opens into the first chamber (103) and access to the second chamber (104) from said passage (41) is barred, to a second position, in which said passage (41) opens into the second chamber (104) and access to the first chamber (103) from said passage (41) is barred, and vice versa.

2. An assembly according to claim 1, **characterized in that** wires extend through the closing device (30, 45, 52, 60) in use, whereby the closing device can only be moved from one position to the other after the wires extending through the closing device have been removed.

3. An assembly according to claim 1 or 2, **characterized in that** said box is provided with partition walls extending transversely to a bottom portion.

4. An assembly according to claim 1, 2 or 3, **characterized in that** said closing device comprises a guide block which is detachably accommodated in said port, which guide block is provided with a slot, which is in open communication with said passage and with one of said apertures.

5. An assembly according to claim 1, 2 or 3, **characterized in that** said closing device comprises at least one plate, which is pivoted to the port between two apertures lying side by side, and which extends to an edge of said passage.

6. An assembly according to claim 1, 2 or 3, **characterized in that** closing device is provided with an elastically deformable plate, which has a semi-circular section near said passage and which is pivoted to the port between two apertures arranged in adjoining relationship.

7. An assembly according to claim 1, 2 or 3, **characterized in that** said closing device comprises a tube which is capable of tilting movement within said port, which tube is in open communication with said passage with a first end, and which can be tilted to various positions in which the second end of said tube is in communication with one of said apertures.

8. An assembly according to claim 1, 2 or 3, **characterized in that** said closing device comprises a pivoted disc, which is provided with a recess being in communication with said passage, and with a channel which is in communication with one of said apertures, depending on the position of said pivoted disc, whilst the other apertures are closed by the disc.

9. An assembly according to claim 1, 2 or 3, **characterized in that** said closing device comprises an elastically deformable conduit, which can be buckle into various positions, whereby one end of said conduit is in open communication with said passage and another end of said conduit is in communication with one of said apertures in each of said positions.

10. An assembly according to claim 1, 2 or 3, **characterized in that** said closing device comprises a guide block, which is rotatably journalled in said passage, and which is provided with a slot which is in open communication with one of said apertures.

11. An assembly for coupling wires, which assembly is provided with a box (3) comprising at least one chamber, which box comprises at least two ports (4) and one closing device, by means of which the connection between the first port and the second port can be closed off from said chamber, **characterized in that** the box comprises two aligned tube portions (1) making up the ports, whereby the closing device comprises a tubular segment (10), which can be detachably fitted between the two tube portions (1).

12. An assembly according to claim 11, **characterized in that** said tube portions are at least partially interconnected.

13. An assembly according to claim 11 or 12, **characterized in that** said tube portions are curved, whereby said tube portions and said tubular segment extend along one and the same radius of curvature.

14. An assembly according to any one of the preceding claims 11 - 13, **characterized in that** the ends of the tube portions facing toward each other are believed, whereby the tips extend toward each other, whilst the tubular segment comprises two co-axial parts provided with bevelled ends, whereby the inner portion can be positioned between the bevelled ends of said tube portions, after which the second part can be rotated about the first part so as to lock the first part against said tube portions.

15. An assembly according to any one of the preceding claims 11 - 13, **characterized in that** said closing device is provided with at least one guide block which is detachably accommodated between said ports, which guide block is provided with a slot which is either in open communication with both ports or with one port and a space present within the box.

16. An assembly according to any one of the preceding claims, **characterized in that** said box comprises a space which is positioned centrally between said chambers.

17. An assembly according to any one of the preceding claims, **characterized in that** chambers separated from each other by another chamber are in open communication with each other via a coupling conduit.

18. An assembly according to any one of the preceding claims, **characterized in that** said port is detachably connected to said box.

19. An assembly according to any one of the preceding claims, **characterized in that** said box comprises a closable auxiliary box.

20. A port suitable for being used in an assembly according to any one of the preceding claims.

## Patentansprüche

1. Baueinheit (2, 6) zum Koppeln von Drähten, welche Baueinheit mit einem Kammern aufweisenden Gehäuse (3, 21) versehen ist, wobei das Gehäuse wenigstens drei Anschlüsse (4, 40, 50, 60) umfasst und eine Schließvorrichtung, mittels welcher die Verbindung von einem Anschluss zu wenigstens einem der anderen Anschlüsse geschlossen werden kann, **dadurch gekennzeichnet, dass** das Gehäuse wenigstens zwei Kammern (23-27) umfasst, welche jede wenigstens einen der Anschlüsse (4, 40, 50, 60) umfassen, wobei die Baueinheit außerdem mit einem Anschluss versehen ist, der die Schließvorrichtung (30, 45; 62, 60) umfasst, welcher Anschluss auf einer Seite mit wenigstens zwei Öffnungen (42) versehen ist, die in verschiedene Kammern im Gehäuse führen, und welcher auf einer Seite, die vom Gehäuse abgekehrt ist, mit einem einzelnen Gang (41) versehen ist, wobei die Schließvorrichtung (30, 45) wenigstens von einer ersten Position, in welcher der Gang (41) sich in die erste Kammer (103) öffnet und der Zugang zur zweiten Kammer (104) von dem Gang (41) verriegelt ist, in eine zweite Position bewegt werden kann, in welcher der Gang (41) sich in die zweite Kammer (104) öffnet und der Zugag zur ersten Kammer (103) von dem Gang (41) verriegelt ist, und umgekehrt.

2. Baueinheit nach Anspruch 1, **dadurch gekennzeichnet, dass** die Drähte sich beim Gebrauch durch die Schließvorrichtung (30, 45, 52, 60) erstrecken, wobei die Schließvorrichtung nur von einer Position in die andere bewegt werden kann, nachdem die Drähte, welche sich durch die Schließvorrichtung erstrecken, entfernt wurden.

3. Baueinheit nach Anspruch 1 oder 2, **dadurch gekennzeichnet, dass** das Gehäuse mit Trennwänden versehen ist, die sich auerverlaufend zu einem Bodenabschnitt erstrecken.

4. Baueinheit nach Anspruch 1, 2 oder 3, **dadurch gekennzeichnet, dass** die Schließvorrichtung einen Führungsblock umfasst, welcher in dem Anschluss ausbaubar untergebracht ist, welcher Führungsblock mit einem Schlitz versehen ist, welcher in offener Kommunikation mit dem Gang und mit einer der Öffnungen steht.

5. Baueinheit nach Anspruch 1, 2 oder 3, **dadurch gekennzeichnet, dass** die Schließvorrichtung wenigstens eine Platte umfasst, welche mit Anschluss zwischen zwei Öffnungen, die nebeneinander liegen, drehbar verbunden ist und welche sich zu einer Kante des Gangs erstreckt.

6. Baueinheit nach Anspruch 1, 2 oder 3, **dadurch gekennzeichnet, dass** die Schließvorrichtung mit einer elastisch verformbaren Platte versehen ist, welche einen Halbkreisquerschnitt in der Nähe des Gangs aufweist und welche mit dem Anschluss zwischen zwei Öffnungen, die in benachbarten Verhältnis angeordnet sind, drehbar verbunden ist.

7. Baueinheit nach Anspruch 1, 2 oder 3, **dadurch gekennzeichnet, dass** die Schließvorrichtung ein Rohr umfasst, welches zu einer Kippbewegung innerhalb des Anschlusses fähig ist, welches Rohr in offener Kommunikation mit dem Gang mit einem ersten Ende steht und welche in verschiedene Positionen gekippt werden kann, in welchen das zweite Ende des Rohres in Kommunikation mit einer der Öffnungen steht.

8. Baueinheit nach Anspruch 1, 2 oder 3, **dadurch gekennzeichnet, dass** die Schließvorrichtung eine Drehscheibe umfasst, welche versehen ist mit einer Aussparung, die in Kommunikation mit dem Gang ist, und mit einem Kanal, welcher in Kommunikation mit einer der Öffnungen ist, in Abhängigkeit von der Position der Drehscheibe, während die anderen Öffnungen durch die Scheibe geschlossen sind.

9. Baueinheit nach Anspruch 1, 2 oder 3, **dadurch gekennzeichnet, dass** die Schließvorrichtung eine elastisch verformbare Rohrleitung umfasst, welche in verschiedene Positionen geknickt werden kann, wobei ein Ende der Rohrleitung in offener Kommunikation mit dem Gang ist und ein anderes Ende der Rohrleitung in Kommunikation mit einer der Öffnungen in jeder der Positionen steht.

10. Baueinheit nach Anspruch 1, 2 oder 3, **dadurch gekennzeichnet, dass** die Schließvorrichtung einen Führungsblock umfasst, welcher im Gang drehbar gelagert ist und welcher mit einem Schlitz versehen ist, welcher in offener Kommunikation mit einer der Öffnungen steht.

11. Baueinheit zum Koppeln von Drähten, wobei die Baueinheit mit einem wenigstens eine Kammer aufweisenden Gehäuse (3) versehen ist, wobei das Gehäuse wenigstens zwei Anschlüsse (4) und eine Schließvorrichtung umfasst, mittels welcher die Verbindung zwischen dem ersten Anschluss und dem zweiten Anschluss von der Kammer abgesperrt werden kann, **dadurch gekennzeichnet, dass** das Gehäuse zwei ausgerichtete Rohrabschnitte (1) umfasst, welche die Anschlüsse bilden, wobei die Schließvorrichtung ein Rohrsegment (10) umfasst, welches zwischen den beiden Rohrabschnitten (1) ausbaubar eingepasst werden kann.

12. Baueinheit nach Anspruch 11, **dadurch gekennzeichnet, dass** die Rohrabschnitte wenigstens teilweise miteinander verbunden sind.

13. Baueinheit nach Anspruch 11 oder 12, **dadurch gekennzeichnet, dass** die Rohrabschnitte gekrümmt sind, wobei die Rohrabschnitte und das Rohrsegment sich entlang ein und demselben Krümmungsradius erstrecken.

14. Baueinheit nach einem der vorhergehenden Ansprüche 11 bis 13, **dadurch gekennzeichnet, dass** die Enden der Rohrabschnitte, die zueinander gekehrt sind, abgeschrägt sind, wobei die Spitzen sich zueinander erstrecken, während das Rohrsegment zwei koaxiale Teile umfasst, die mit abgeschrägten Enden versehen sind, wobei der innere Abschnitt zwischen den abgeschrägten Enden der Rohrabschnitte angeordnet werden kann, wonach das zweite Teil um das erste Teil gedreht werden kann, um das erste Teil gegen die Rohrabschnitte zu versperren.

15. Baueinheit nach einem der vorhergehenden Ansprüche 11 bis 13, **dadurch gekennzeichnet, dass** die Schließvorrichtung mit wenigstens einem Führungsblock versehen ist, welcher zwischen den Anschlüssen ausbaubar untergebracht ist, dass der Führungsblock mit einem Schlitz versehen ist, welcher entweder in offener Kommunikation mit beiden Anschlüssen oder mit einem Anschluss steht, und einem Raum, der innerhalb des Gehäuses vorhanden ist.

16. Baueinheit nach einem der vorhergehenden Ansprüche, **dadurch gekennzeichnet, dass** das Gehäuse einen Raum umfasst, welcher zentral zwischen den Kammern angeordnet ist.

17. Baueinheit nach einem der vorhergehenden Ansprüche, **dadurch gekennzeichnet, dass** Kammern, die durch eine anders Kammer voneinander getrennt sind, über eine Kopplungsleitung in offener Kommunikation miteinander stehen.

18. Baueinheit nach einem der vorhergehenden Ansprüche, **dadurch gekennzeichnet, dass** der Anschluss mit dem Gehäuse lösbar verbunden ist.

19. Baueinheit nach einem der vorhergehenden Ansprüche, **dadurch gekennzeichnet, dass** das Gehäuse ein schließbares Zusatzgehäuse umfasst.

20. Anschluss, der geeignet ist, in einer Baueinheit gemäß einem der vorhergehenden Ansprüche verwendet zu werden.

## Revendications

1. Ensemble (2, 6) de couplage de fils, l'ensemble comprenant un boîtier (3, 21) qui contient des chambres, le boîtier comprenant au moins trois canaux (4, 40, 50, 60) et un dispositif de fermeture grâce auquel la connexion d'un canal à au moins l'un des autres canaux peut être fermée, **caractérisé en ce que** le boîtier comporte au moins deux chambres (23-27) comprenant chacune l'un au moins des canaux (4, 40, 50, 60), **en ce que** l'ensemble comporte en outre un canal qui comporte le dispositif de fermeture (30, 45 ; 62, 60), ce canal ayant d'un côté au moins deux orifices (42) qui débouchent dans des chambres différentes du boîtier et ayant un côté tourné vers le côté opposé du boîtier muni d'un seul passage (41), **en ce que** le dispositif de fermeture (30, 45) peut être déplacé au moins d'une première position, dans laquelle le passage (41) débouche dans la première chambre (103) et l'accès à la seconde chambre (104) du passage (41) est empêché, à une seconde position, dans laquelle le passage (41) débouche dans la seconde chambre (104) et l'accès à la première chambre (103) du passage (41) est empêché, et inversement.

2. Ensemble selon la revendication 1, **caractérisé en ce que** les fils s'étendent à travers le dispositif de fermeture (30, 45, 52, 60) pendant l'utilisation, si bien que le dispositif de fermeture ne peut être déplacé d'une position à l'autre que lorsque les fils passant à travers le dispositif de fermeture ont été retirés.

3. Ensemble selon la revendication 1 ou 2, **caractérisé en ce que** le boîtier a des cloisons disposées transversalement à une partie inférieure.

4. Ensemble selon la revendication 1, 2 ou 3, **caractérisé en ce que** le dispositif de fermeture comporte un bloc de guidage logé de façon amovible dans le canal, le bloc de guidage ayant une fente qui assure une communication libre avec le passage et l'un des orifices.

5. Ensemble selon la revendication 1, 2 ou 3, **caractérisé en ce que** le dispositif de fermeture comporte au moins une plaque qui peut pivoter vers le canal entre deux orifices places côte à côte et qui s'étend vers un bord du passage.

6. Ensemble selon la revendication 1, 2 ou 3, **caractérisé en ce que** le dispositif de fermeture comporte une plaque élastiquement déformable qui a une section en demi-cercle près du passage et qui peut pivoter vers le canal entre deux orifices qui sont adjacents.

7. Ensemble selon la revendication 1, 2 ou 3, **caractérisé en ce que** le dispositif de fermeture est un tube qui peut pivoter à l'intérieur du canal, le tube étant en communication libre avec le passage à une première extrémité, et pouvant pivoter vers diverses positions dans lesquelles la seconde extrémité du tube est en communication avec l'un des orifices.

8. Ensemble selon la revendication 1, 2 ou 3, **caractérisé en ce que** le dispositif de fermeture comporte un disque qui pivote et qui est logé dans une cavité en communication avec le passage, et avec une conduite qui communique avec l'un des orifices, suivant la position du disque qui peut pivoter, les autres orifices étant fermés par le disque.

9. Ensemble selon la revendication 1, 2 ou 3, **caractérisé en ce que** le dispositif de fermeture est un conduit élastiquement déformable qui peut se déformer pour prendre diverses positions, une première extrémité du conduit étant en communication libre avec le passage et une autre extrémité du conduit étant en communication avec l'un des orifices à chacune des positions.

10. Ensemble selon la revendication 1, 2 ou 3, **caractérisé en ce que** le dispositif de fermeture comporte un bloc de guidage qui peut tourillonner dans le passage et qui a une fente en communication libre avec l'un des orifices.

11. Ensemble de couplage de fils, l'ensemble comportant un boîtier (3) qui contient au moins une chambre, le boîtier comprenant au moins deux canaux (4) et un dispositif de fermeture par lequel la connexion entre le premier canal et le second canal peut être fermée par rapport à la chambre, **caractérisé en ce que** le boîtier comporte deux parties alignées de tube (1) formant les canaux, et le dispositif de fermeture est un segment tubulaire (10) qui peut être monté de façon amovible entre les deux parties de tube (1).

12. Ensemble selon la revendication 11, **caractérisé en ce que** les parties de tube sont au moins partiellement interconnectées.

13. Ensemble selon la revendication 11 ou 12, **caractérisé en ce que** les parties de tube sont courbes, si bien que les parties de tube et de segment tubulaire s'étendent le long d'un seul et même rayon de courbure.

14. Ensemble selon l'une quelconque des revendications 11 à 13, **caractérisé en ce que** les extrémités des parties de tube tournées l'une vers l'autre sont chanfreines de manière que les bouts s'étendent l'un vers l'autre, alors que le segment tubulaire comprend deux parties coaxiales ayant les extrémités chanfreinées, d'une manière telle que la partie interne peut être positionnée entre les extrémités chanfreinées des parties de tube, puis la seconde partie peut être tournée autour de la première partie afin que la première partie soit bloquée par rapport aux parties de tube.

15. Ensemble selon l'une quelconque des revendications précédentes 11 à 13, **caractérisé en ce que** le dispositif de fermeture a au moins un bloc de guidage logé de façon amovible entre les orifices, le bloc de guidage ayant une fente qui est en communication libre soit avec les deux canaux soit avec un canal et un espace présent dans le boîtier.

16. Ensemble selon l'une quelconque des revendications précédentes, **caractérisé en ce que** le boîtier comporte un espace positionné au centre entre les chambres.

17. Ensemble selon l'une quelconque des revendications précédentes, **caractérisé en ce que** des chambres séparées l'une de l'autre par une autre chambre communiquent librement l'une avec l'autre par un conduit de couplage.

18. Ensemble selon l'une quelconque des revendications précédentes, **caractérisé en ce que** le canal est connecté de façon amovible au boîtier.

19. Ensemble selon l'une quelconque des revendications précédentes, **caractérisé en ce que** le boîtier comporte un boîtier auxiliaire qui peut être fermé.

20. Canal destiné à être utilisé dans un ensemble selon l'une quelconque des revendications précédentes.
